# EUROPEAN PATENT SPECIFICATION

(11) **EP 2 718 012 B1**
(45) Date of publication and mention of the grant of the patent: **27.04.2016**
(21) Application number: 12797625.6
(22) Date of filing: 23.05.2012
(51) Int. Cl.: B01J 31/14, B01J 31/22, C08F 4/6592, C08F 210/16

(54) **CATALYST SYSTEMS COMPRISING MULTIPLE NON-COORDINATING ANION ACTIVATORS AND METHODS FOR POLYMERIZATION THEREWITH**
KATALYSATORSYSTEME MIT MEHRFACHEN NICHT-KOORDINIERENDEN ANION-AKTOREN UND POLYMERISIERUNGSVERFAHREN DAMIT
SYSTÈMES DE CATALYSEURS COMPRENANT DE MULTIPLES ACTIVATEURS ANIONS NON COORDINANTS ET PROCÉDÉS DE POLYMÉRISATION À L'AIDE DE CES SYSTÈMES DE CATALYSEURS

(30) Priority: 08.06.2011 US 201161494730 P; 15.09.2011 EP 11181394
(43) Date of publication of application: 16.04.2014
(73) Proprietor: ExxonMobil Chemical Patents Inc., Baytown, TX 77520 (US)
(72) Inventor: STEWART, Ian, C., Houston, TX 77007 (US)
(74) Representative: Mareschal, Anne
(86) International application number: PCT/US2012/039075
(87) International publication number: WO 2012/170202

(56) References cited:
- EP-A1- 0 570 982
- US-A- 5 153 157
- US-A- 5 241 025
- US-A1- 2002 032 120
- US-A1- 2005 159 299
- US-A1- 2006 009 595
- US-A1- 2009 264 608
- US-B1- 6 211 105
- JIA WEI ET AL: "Programmable Modulation of Co-monomer Relative Reactivities for Living Coordination Polymerization through Reversible Chain Transfer between "Tight" and "Loose" Ion Pairs", ANGEWANDTE CHEMIE INTERNATIONAL EDITION, vol. 49, no. 48, 22 November 2010 (2010-11-22), pages 9140-9144, XP055030547, ISSN: 1433-7851, DOI: 10.1002/anie.201004709

## Description

### Field of the Invention

This invention relates to polymerization processes using catalyst systems (e.g., metallocene catalyst systems) comprising a transition metal catalyst compound (e.g., a metallocene catalyst compound) and at least two different non-coordinating anion activators.

### Background of the Invention

Single-site catalyst compounds, such as metallocenes, are often paired with methyl alumoxane or a non-coordinating anion activator to polymerize monomers, such as olefins. These catalysts are regarded as precise and often produce polymers having both narrow molecular weight distribution (Mw/Mn) and narrow composition distribution.

The precision of single-site metallocene catalysts is, however, also a limitation in that narrower distribution in polymer molecular weight and/or compositional distribution can hinder post-reactor processing. The ability to systematically control this distribution in a novel way would be useful.

It is thought that the structure of both the catalyst and the activator can affect the reactivity of the resulting activated catalyst ion pair. This can frequently lead to differences in molecular weight and comonomer content for the resulting polymer products. While multiple catalyst/activator pairings have been employed in the past, the use of a single catalyst with multiple non-coordinating anion activators has not been described.

Combinations of activators have been described in U.S. Patent Nos. 5,153,157; 5,453,410; EP 0 573 120 B1; WO 94/07928; WO 95/14044; and "*Unusual Synergistic Effect of Cocatalysts in the Polymerization of Propylene by a Zirconium Bis(benzamidinate)Dimethyl Complex*" Volkis, et al., Organometallics, 2006, 25, pp. 2722-2724. These documents all discuss the use of an alumoxane in combination with an ionizing activator.

Two step activation sequences have also been described in WO 2008/146215, where alumoxane was staggered with an organylaluminum compound. Likewise, WO 00/09514 discloses tris (perfluorophenyl) aluminum combined with di(isobutyl)(2,6-ditert-butyl-4-methylphenoxy)aluminum to form two aluminum activators for (t-butylamido)dimethyl(tetramethyl-cyclopentadienyl)silanetitanium 1,3 pentadiene; or dimethylsilane bis(2-methyl-4phenylindenyl)zirconium 1,4 diphenyl-1,3 butadiene; or (t-butylamido)(tetramethylcyclopentadienyl)dimethylsilane titanium dimethyl; or rac dimethylsilyl bis(i-indenyl) zirconium dimethyl.

Wei et al., in "Programmable Modulation of Comonomer Relative Reactivities for Living Coordination Polymerization through Reversible Chain Transfer between "Tight" and "Loose" Ion Pairs", Angew. Chem. Int. Ed. 2010, 49, pp. 9140-9144, disclose use of diethyl zinc in combination with [PhNHMe₂][B(C₆F₅)₄].

Other references of interest include EP 0 426 637; EP 0 573 403; EP 0 277 004; EP 0 277 003; EP 0 811 627; U.S. Patent Nos. 6,147,173; 5,387,568; 5,648,438; and U.S. 2010/0029873.

None of the above references disclose two boron containing non-coordinating anion activators to produce polymers having different populations. Likewise, none of the above references disclose combinations of Group 13 element activator complexes comprising at least one halogenated, nitrogen containing aromatic group.

In view of the above, there is a continuing need for activating cocatalyst compounds both to improve industrial economics and to provide simpler methods of synthesis and preparation of suitable polymers. Additionally, improvements in gas phase and slurry polymerization of olefins, where supported catalysts are typically used, are sought so as to meet the demanding criteria of industrial processes.

### Summary of the Invention

This invention relates to a method to polymerize olefins comprising contacting one or more olefins with a catalyst system comprising a transition metal catalyst compound and at least two boron containing NCA activators represented by the formula:

Z_{d}⁺ (A^{d-})

where: Z is (L-H) or a reducible Lewis acid; L is a neutral Lewis base; H is hydrogen; (L-H) is a Bronsted acid; A^{d-} is a boron containing non-coordinating anion having the charge d-; d is 1, 2, or 3; where in the first NCA activator Z is a Bronsted acid and in the second NCA activator Z is a reducible Lewis acid.

This invention also relates to a method to polymerize olefins comprising contacting one or more olefins with a catalyst system comprising a transition metal catalyst compound and at least two NCA activators, where at least one NCA activator comprises an anion as described in Formula I and at least one NCA activator does not comprise an anion as described in Formula I, where Formula I is:

RₙM(ArNHal)₄₋ₙ (I)

where R is a monoanionic ligand; M is a Group 13 metal or metalloid; ArNHal is a halogenated, nitrogen-containing aromatic ring, polycyclic aromatic ring, or aromatic ring assembly in which two or more rings (or fused ring systems) are joined directly to one another or together; and n is 0, 1, 2, or 3. Typically NCAs comprising an anion of Formula I also comprises a suitable cation that is essentially non-interfering with the ionic catalyst complexes formed with the transition metal compounds.

This invention also relates to a method to polymerize olefins comprising contacting one or more olefins with a catalyst system comprising a transition metal catalyst compound and at least two NCA activators, where the two NCA activators comprise an anion as described in Formula I except that the N in the second NCA in the ArNHal is at a different position in the nitrogen containing aromatic ring than the N in the first NCA, where Formula I is:

RₙM(ArNHal)₄₋ₙ (I)

where R is a monoanionic ligand; M is a Group 13 metal or metalloid; ArNHal is a halogenated, nitrogen-containing aromatic ring, polycyclic aromatic ring, or aromatic ring assembly in which two or more rings (or fused ring systems) are joined directly to one another or together; and n is 0, 1, 2, or 3. Typically the each of the NCAs comprising an anion of Formula I also comprises a suitable cation that is essentially non-interfering with the ionic catalyst complexes formed with the transition metal compounds.

This invention also relates to the catalyst system useful in the methods above.

### Brief Description of the Figures

Figure 1 is a chart of the ion pairing between activated catalysts and non-coordinating anions, where R is C₁ to C₄₀ substituted or unsubstituted hydrocarbyl, and p is a polymer chain.
Figure 2 is a chart of the activators and the catalysts used in Experiments 1-24.
Figure 3 is the GPC trace for the mixed activator experiment (Activators A+C) of Example 11.
Figure 4 is a chart of the Mw's of polymers produced in Examples 1-24.
Figure 5 is a chart of the PDIs (Mw/Mn) of polymers produced in Examples 1-24.
Figure 6 is a chart of the comonomer (octene) incorporation's of polymers produced in Examples 1-24.

### Detailed Description

For the purposes of this invention and the claims thereto, the new numbering scheme for the Periodic Table Groups is used as in CHEMICAL AND ENGINEERING NEWS, 63(5), pg. 27 (1985).

"Catalyst productivity" is a measure of how many grams of polymer (P) are produced using a polymerization catalyst comprising W g of catalyst (cat), over a period of time of T hours; and may be expressed by the following formula: P/(T x W) and expressed in units of gPgcat⁻¹hr⁻¹. Conversion is the amount of monomer that is converted to polymer product, and is reported as mol% and is calculated based on the polymer yield and the amount of monomer fed into the reactor. Catalyst activity is a measure of how active the catalyst is and is reported as the mass of product polymer (P) produced per mole of catalyst (cat) used (kgP/molcat).

An "olefin," alternatively referred to as "alkene," is a linear, branched, or cyclic compound of carbon and hydrogen having at least one double bond. For purposes of this specification and the claims appended thereto, when a polymer or copolymer is referred to as comprising an olefin, the olefin present in such polymer or copolymer is the polymerized form of the olefin. For example, when a copolymer is said to have an "ethylene" content of 35 wt% to 55 wt%, it is understood that the mer unit in the copolymer is derived from ethylene in the polymerization reaction and said derived units are present at 35 wt% to 55 wt%, based upon the weight of the copolymer. A "polymer" has two or more of the same or different mer units. A "homopolymer" is a polymer having mer units that are the same. A "copolymer" is a polymer having two or more mer units that are different from each other. Accordingly, the definition of copolymer, as used herein, includes terpolymers and the like. A "terpolymer" is a polymer having three mer units that are different from each other. "different" as used to refer to mer units indicates that the mer units differ from each other by at least one atom or are different isomerically. An "ethylene polymer" or "ethylene copolymer" is a polymer or copolymer comprising at least 50 mol% ethylene derived units. A "propylene polymer" or "propylene copolymer" is a polymer or copolymer comprising at least 50 mol% propylene derived units.

For the purposes of this invention, ethylene shall be considered an α-olefin.

For purposes of this invention and claims thereto, the term "substituted" means that a hydrogen group has been replaced with a heteroatom, or a heteroatom containing group. For example, a "substituted hydrocarbyl" is a radical made of carbon and hydrogen where at least one hydrogen is replaced by a heteroatom or heteroatom containing group.

The term "non-coordinating anion" (NCA) means an anion which either does not coordinate to a cation or which is only weakly coordinated to a cation thereby remaining sufficiently labile to be displaced by a neutral Lewis base. "Compatible" non-coordinating anions are those which are not degraded to neutrality when the initially formed complex decomposes. Further, the anion will not transfer an anionic substituent or fragment to the cation so as to cause it to form a neutral transition metal compound and a neutral by-product from the anion. Non-coordinating anions useful in accordance with this invention are those that are compatible, stabilize the transition metal cation in the sense of balancing its ionic charge at +1, and yet retain sufficient lability to permit displacement during polymerization.

This invention relates to a method to polymerize olefins comprising contacting olefins (preferably C₂ to C₄₀ olefins, preferably C₂ to C₂₀ alpha olefins, preferably ethylene, propylene, butene, pentene, hexene, heptene, octene, nonene, decene, undecene dodecene, and isomers thereof) with a catalyst system comprising a transition metal catalyst compound and at least two boron containing NCA activators represented by the formula (14):

Z_{d}⁺ (A^{d-}) (14)

where: Z is (L-H) or a reducible Lewis acid; L is an neutral Lewis base; H is hydrogen; (L-H) is a Bronsted acid; A^{d-} is a boron containing non-coordinating anion having the charge d-; d is 1, 2, or 3; where in the first NCA activator Z is a Bronsted acid and in the second NCA activator Z is a reducible Lewis acid.

This invention also relates to a method to polymerize olefins comprising contacting olefins (preferably C₂ to C₄₀ olefins, preferably C₂ to C₂₀ alpha olefins, preferably ethylene, propylene, butene, pentene, hexene, heptene, octene, nonene, decene, undecene dodecene, and isomers thereof) with a catalyst system comprising a transition metal catalyst compound and at least two NCA activators, where at least one NCA activator comprises an anion as described in Formula I and at least one NCA activator does not comprise an anion as described in Formula I, where Formula I is:

RₙM(ArNHaI)₄₋ₙ (I)

where R is a monoanionic ligand; M is a Group 13 metal or metalloid; ArNHal is a halogenated, nitrogen-containing aromatic ring, polycyclic aromatic ring, or aromatic ring assembly in which two or more rings (or fused ring systems) are joined directly to one another or together; and n is 0, 1, 2, or 3. Typically the NCA comprising an anion of Formula I also comprises a suitable cation that is essentially non-interfering with the ionic catalyst complexes formed with the transition metal compounds, preferably the cation is Z_{d}⁺ as described in Formula 14.

This invention also relates to a method to polymerize olefins comprising contacting olefins (preferably C₂ to C₄₀ olefins, preferably C₂ to C₂₀ alpha olefins, preferably ethylene, propylene, butene, pentene, hexene, heptene, octene, nonene, decene, undecene dodecene, and isomers thereof) with a catalyst system comprising a transition metal catalyst compound and at least two NCA activators, where the two NCA activators comprise an anion as described in Formula I except that the N in the second NCA in the ArNHal is at a different position in the nitrogen containing aromatic ring than the N in the first NCA, where Formula I is:

RₙM(ArNHal)₄₋ₙ, (I)

where R is a monoanionic ligand; M is a Group 13 metal or metalloid; ArNHal is a halogenated, nitrogen-containing aromatic ring, polycyclic aromatic ring, or aromatic ring assembly in which two or more rings (or fused ring systems) are joined directly to one another or together; and n is 0, 1, 2, or 3. Typically the two NCAs comprising an anion of Formula I each also comprise a suitable cation that is essentially non-interfering with the ionic catalyst complexes formed with the transition metal compounds, preferably the cation is Z_{d}⁺ as described in Formula 14.

In another embodiment, this invention relates to a catalyst system comprising a transition metal catalyst compound and at least two boron containing non-coordinating anion "NCA" activators represented by the Formula (14):

Z_{d}⁺(A^{d}-) (14)

where Z is (L-H) or a reducible Lewis acid; L is an neutral Lewis base; H is hydrogen; (L-H) is a Bronsted acid; A^{d-} is a boron containing non-coordinating anion having the charge d-; d is 1, 2, or 3; where in the first NCA activator Z is a Bronsted acid and in the second NCA activator Z is a reducible Lewis acid, preferably in the second NCA Z_{d}⁺ is triphenylcarbonium.

In a preferred embodiment, this invention also relates to a catalyst system comprising a transition metal catalyst compound and at least two non-coordinating anion "NCA" activators, where at least one NCA activator comprises an anion as described in Formula I and at least one NCA activator does not comprise an anion as described in Formula I (but preferably the NCA is described by Formula 14 above), where Formula I is:

RₙM(ArNHal)₄₋ₙ (I)

where R is a monoanionic ligand; M is a Group 13 metal or metalloid (preferably Al or B); ArNHal is a halogenated, nitrogen-containing aromatic ring, polycyclic aromatic ring, or aromatic ring assembly in which two or more rings (or fused ring systems) are joined directly to one another or together (preferably one or more of tetrafluoropyridine, hexafluoroquinoline, or hexafluoroisoquinoline); and n is 0, 1, 2, or 3. Typically the NCA comprising an anion of Formula I also comprises a suitable cation that is essentially non-interfering with the ionic catalyst complexes formed with the transition metal compounds, preferably the cation is Z_{d}⁺ as described in Formula 14.

In a preferred embodiment, this invention also relates to a catalyst system comprising a transition metal catalyst compound and at least two non-coordinating anion "NCA" activators, where the two NCA activators comprise anions as described in Formula I except that the N in the second NCA in the ArNHal is at a different position in the nitrogen containing aromatic ring than the N in the first NCA, where Formula I is:

RₙM(ArNHal)₄₋ₙ (I)

where R is a monoanionic ligand; M is a Group 13 metal or metalloid (preferably Al or B); ArNHal is a halogenated, nitrogen-containing aromatic ring, polycyclic aromatic ring, or aromatic ring assembly in which two or more rings (or fused ring systems) are joined directly to one another or together (preferably one or more of tetrafluoropyridine, hexafluoroquinoline, or hexafluoroisoquinoline); and n is 0, 1, 2, or 3. Typically the two NCAs comprising an anion of Formula I each also comprise a suitable cation that is essentially non-interfering with the ionic catalyst complexes formed with the transition metal compounds, preferably the cation is Z_{d}⁺ as described in Formula 14.

In a preferred embodiment in any of the catalyst systems containing an NCA represented by Formula 14 described above, the reducible Lewis acid is represented by the formula: (Ar₃C⁺), where Ar is aryl or aryl substituted with a heteroatom, a C₁ to C₄₀ hydrocarbyl, or a substituted C1 to C40 hydrocarbyl, preferably the reducible Lewis acid represented by the formula: (Ph₃C⁺), where Ph is phenyl or phenyl substituted with a heteroatom, a C₁ to C₄₀ hydrocarbyl, or a substituted C1 to C40 hydrocarbyl.

In a preferred embodiment in any of the catalyst systems containing an NCA represented by Formula 14 described above, Z_{d}⁺ is represented by the formula: (L-H)_{d}⁺, wherein L is an neutral Lewis base; H is hydrogen; (L-H) is a Bronsted acid; and d is 1, 2, or 3, preferably (L-H)_{d}⁺ is a Bronsted acid selected from ammoniums, oxoniums, phosphoniums, silyliums, and mixtures thereof.

In a preferred embodiment in any of the catalyst systems containing an NCA represented by Formula 14 described above, the anion component A^{d-} is represented by the formula [M^{k+}Qₙ]^{d-} wherein k is 1, 2, or 3; n is 1, 2, 3, 4, 5, or 6 (preferably 1, 2, 3, or 4); n - k = d; M is boron; and Q is independently selected from hydride, bridged or unbridged dialkylamido, halide, alkoxide, aryloxide, hydrocarbyl, substituted hydrocarbyl, halocarbyl, substituted halocarbyl, and halosubstituted-hydrocarbyl radicals, said Q having up to 20 carbon atoms with the proviso that in not more than 1 occurrence is Q a halide.

In a preferred embodiment in any of the catalyst systems containing an NCA comprising an anion represented by Formula I described above, R is selected from the group consisting of substituted or unsubstituted C₁ to C₃₀ hydrocarbyl aliphatic or aromatic groups, where substituted means that at least one hydrogen on a carbon atom is replaced with a hydrocarbyl, halide, halocarbyl, hydrocarbyl or halocarbyl substituted organometalloid, dialkylamido, alkoxy, aryloxy, alkysulfido, arylsulfido, alkylphosphido, arylphosphide, or other anionic substituent; fluoride; bulky alkoxides, where bulky means C₄ to C₂₀ hydrocarbyl groups; --SR¹, --NR ²₂, and --PR ³₂, where each R¹, R², or R³ is independently a substituted or unsubstituted hydrocarbyl as defined above; or a C₁ to C₃₀ hydrocarbyl substituted organometalloid.

In a preferred embodiment in any of the catalyst systems containing an NCA comprising an anion represented by Formula I described above, the NCA also comprises a reducible Lewis acid represented by the formula: (Ar₃C⁺), where Ar is aryl or aryl substituted with a heteroatom, a C₁ to C₄₀ hydrocarbyl, or a substituted C1 to C40 hydrocarbyl, preferably the reducible Lewis acid represented by the formula: (Ph₃C⁺), where Ph is phenyl or phenyl substituted with a heteroatom, a C₁ to C₄₀ hydrocarbyl, or a substituted C₁ to C₄₀ hydrocarbyl.

In a preferred embodiment in any of the catalyst systems containing an NCA comprising an anion represented by Formula I described above, the NCA also comprises a cation represented by the formula, (L-H)_{d}⁺, wherein L is an neutral Lewis base; H is hydrogen; (L-H) is a Bronsted acid; and d is 1, 2, or 3, preferably (L-H)_{d}⁺ is a Bronsted acid selected from ammoniums, oxoniums, phosphoniums, silyliums, and mixtures thereof.

The NCAs, anions, and cations included in the catalyst systems described above are themselves further described below and such further description is to be considered a part of the catalyst system descriptions above.

As noted above, the catalyst systems of this invention comprise at least two NCA activators. Without wishing to be bound by theory, the inventor has noted that the activators that are "more different" (i.e., one "non coordinating" and one "weakly coordinating", per the definition above) lead to unexpected results, such as bimodal Mw/Mn.

In a preferred embodiment, any of the activators described herein may be mixed together before or after combination with the catalyst compound and/or support, preferably before being mixed with the catalyst compound and/or support.

In a preferred embodiment, the molar ratio of the first NCA activator to the second NCA activator can be any ratio. In some embodiments, the molar ratio of the first NCA activator to the second NCA activator is 0.01:1 to 10,000:1, preferably 0.1:1 to 1000:1, preferably 1:1 to 100:1.

Further, the typical activator-to-catalyst ratio, e.g., all activator (NCAs)-to-catalyst ratio is a 1:1 molar ratio. Alternate preferred ranges include from 0.1:1 to 100:1, alternately from 0.5:1 to 200:1, alternately from 1:1 to 500:1 alternately from 1:1 to 1000:1. A particularly useful range is from 0.5:1 to 10:1, preferably 1:1 to 5:1.

Preferred combinations of activators include: 1) (Ph₃C⁺][B(C₆F₅)₄⁻] & [Me₃NH⁺][B(C₆F₅)₄⁻]; 2) [Ph₃C⁺][B(C₆F₅)₄⁻] & 1-(4-(tris(pentafluorophenyl)borate)-2,3,5,6-tetrafluorophenyl)pyrrolidinium; and 3) tetrakis(pentafluorophenyl)borate & 4-(tris(pentafluorophenyl)borate)-2,3,5,6-tetrafluoropyridine.

In a preferred embodiment, a triaryl carbonium (such as triphenylcarbenium tetraphenylborate, such as triphenylcarbenium tetrakis(pentafluorophenyl)borate, triphenylcarbenium tetrakis-(2,3,4,6-tetrafluorophenyl)borate, triphenylcarbenium tetrakis(perfluoronaphthyl)borate, triphenylcarbenium tetrakis(perfluorobiphenyl)borate, triphenylcarbenium tetrakis(3,5-bis(trifluoromethyl)phenyl)borate ) can be combined with one or more of the non-coordinating anions listed in the "Non Coordinating Anion Activators" section below, such as trialkylammonium tetrakis(pentafluorophenyl)borate, N,N-dialkylanilinium tetrakis(pentafluorophenyl)borate, N,N-dimethyl-(2,4,6-trimethylanilinium) tetrakis(pentafluorophenyl)borate, trialkylammonium tetrakis-(2,3,4,6-tetrafluorophenyl) borate, N,N-dialkylanilinium tetrakis-(2,3,4,6-tetrafluorophenyl)borate, trialkylammonium tetrakis(perfluoronaphthyl)borate, N,N-dialkylanilinium tetrakis(perfluoronaphthyl)borate, trialkylammonium tetrakis(perfluorobiphenyl)borate, N,N-dialkylanilinium tetrakis(perfluorobiphenyl)borate, trialkylammonium tetrakis(3,5-bis(trifluoromethyl)phenyl)borate, N,N-dialkylanilinium tetrakis(3,5-bis(trifluoromethyl)phenyl)borate, N,N-dialkyl-(2,4,6-trimethylanilinium) tetrakis(3,5-bis(trifluoromethyl)phenyl)borate, di-(i-propyl)ammonium tetrakis(pentafluorophenyl)borate, (where alkyl is methyl, ethyl, propyl, n-butyl, sec-butyl, or t-butyl).

In another embodiment, the first NCA is one or more of: triphenylcarbenium tetrakis(perfluoronaphthyl)borate, triphenylcarbenium tetrakis(perfluorobiphenyl)borate, triphenylcarbenium tetrakis(3,5-bis(trifluoromethyl)phenyl)borate, or triphenylcarbenium tetra(perfluorophenyl)borate; and the second NCA is one or more of: N,N-dimethylanilinium tetra(perfluorophenyl)borate, N,N-dimethylanilinium tetrakis(perfluoronaphthyl)borate, N,N-dimethylanilinium tetrakis(perfluorobiphenyl)borate, or N,N-dimethylanilinium tetrakis(3,5-bis(trifluoromethyl)phenyl)borate.

### Polymers Produced

This invention also relates to polymers produced by the catalyst systems and methods described herein. In a preferred embodiment, the polymers produced herein are homopolymers and/or copolymers of one or more linear, branched, or cyclic C₂ to C₄₀ olefins, preferably C₂ to C₂₀ olefins, preferably C₂ to C₁₂ olefins, preferably alpha olefins. In a preferred embodiment, the polymer produced herein is a homopolymer of ethylene or a copolymer of ethylene and one or more comonomers selected from C₃ to C₄₀ olefins, preferably C₃ to C₂₀ olefins, or preferably C₃ to C₁₂ olefins. In a preferred embodiment, the polymer produced herein is a homopolymer of propylene or a copolymer of propylene and one or more comonomers selected from ethylene and C₄ to C₄₀ olefins, preferably C₄ to C₂₀ olefins, or preferably C₃ to C₁₂ olefins. The comonomers (e.g., for the copolymers, such as ethylene copolymers and propylene copolymers) may be linear, branched, or cyclic. The cyclic monomer may be strained or unstrained, monocyclic or polycyclic, and may optionally include heteroatoms and/or one or more functional groups. Exemplary comonomers include ethylene, propylene, butene, pentene, hexene, heptene, octene, nonene, decene, undecene, dodecene, norbornene, norbornadiene, dicyclopentadiene, cyclopentene, cycloheptene, cyclooctene, cyclooctadiene, cyclododecene, 7-oxanorbornene, 7-oxanorbornadiene, substituted derivatives thereof, and isomers thereof, preferably hexene, heptene, octene, nonene, decene, dodecene, cyclooctene, 1,5-cyclooctadiene, 1-hydroxy-4-cyclooctene, 1-acetoxy-4-cyclooctene, 5-methylcyclopentene, cyclopentene, dicyclopentadiene, norbornene, norbornadiene, and their respective homologs and derivatives, preferably norbornene, norbornadiene, and dicyclopentadiene.

In a preferred embodiment, the polymer produced herein has at least 50 mol% of monomer (such as ethylene or propylene) and from 0 mol% to 50 mol% of one or more comonomers, preferably from 0.5 mol% to 45 mol% of one or more of the comonomers described above, preferably from 1 mol% to 30 mol%.

In a preferred embodiment, the polymer produced herein has at least two species or fractions that are different in Mw, Mn or Mz (as measured by Size Exclusion Chromatography as described in US 2008/0045638, paragraph [0600] et seq. including the references cited therein), molecular weight distribution (Mw/Mn), melting point (Tm), crystallization point (Tc), heat of fusion (Hf), glass transition temperature (Tg), tacticity, comonomer distribution breadth index (CDBI), and/or comonomer distribution (CD).

In another embodiment, the polymer produced herein has at least two fractions, each of which is present at at least 5 wt% (preferably at least 10 wt%, preferably at least 20 wt%, preferably at least 30%, preferably at least 40 wt%), based upon the weight of the polymer. Preferably Mw's of the two fractions are different with the Mw fraction having the greater Mw being at least 50% greater than the Mw of the fraction having the lesser Mw.

The polymers produced herein may be fractionated using the preparative TREF procedure below. In a preferred embodiment, once the polymer has been fractionated, the fraction containing the largest mass is selected and subjected to characterization, such as DSC (as described below), likewise the fraction containing the second largest mass is selected and subjected to characterization, such as DSC (as described below). These are the first and second fractions (also referred to as species). Preferably, the first and second fractions show two different peak melting temperatures (Tm, as measured by DSC), preferably the Tm's are different by at least 5°C each from the other, preferably by at least 10°C, preferably by at least 20°C, preferably by at least 30°C, preferably by at least 40°C, preferably by at least 50°C, preferably by at least 60°C, preferably by at least 70°C, preferably by at least 80°C.

Likewise, preferably the first and second fractions show two crystallization temperatures (Tc, as measured by DSC) and the Tc's are different by at least 5°C each from the other, preferably by at least 10°C, preferably by at least 20°C, preferably by at least 30°C, preferably by at least 40°C, preferably by at least 50°C, preferably by at least 60°C, preferably by at least 70°C, preferably by at least 80°C.

Further, in a preferred embodiment, the first and second fractions show heats of fusion (Hf, as measured by DSC) that differ by at least 5 J/g, preferably at least 10 J/g different, preferably at least 20 J/g different, preferably at least 50 J/g different, preferably at least 80 J/g different.

In another embodiment, the comonomer contents of the first and second fractions differ by at least 5 mol%, preferably by at least 10 mol%, preferably by at least 20 mol%, preferably by at least 30 mol%, preferably by at least 40 mol%. A homopolymer shall be considered to have 0 mol% comonomer. Comonomer content can be measured by Fourier Transform Infrared Spectroscopy (FTIR) in conjunction with samples collected by GPC as described in Wheeler and Willis, Applied Spectroscopy, 1993, vol. 47, pp. 1128-1130.

A commercial preparative TREF instrument (Model MC2, Polymer Char S.A.) is used to fractionate the polymer into Chemical Composition Fractions. Approximately 2 g of polymer is placed into a reactor and dissolved in 200 mL of xylene, stabilized with 600 ppm of BHT, at 130°C for approximately 60 minutes. The mixture is allowed to equilibrate for 45 minutes at 90°C, and then cooled to either 30°C (standard procedure) or 15°C (cryo procedure) using a cooling rate of 0.1°C/min (in event of discrepancy between the cryo procedure and the standard procedure, the cryo procedure shall be used for purposes of the claims). The temperature of the cooled mixture is increased until it is within the lowest Isolation Temperature Range to be used (see Table 2) and the mixture is heated to maintain its temperature within the specified range for 20 minutes. The mixture is sequentially filtered through a 75 micron column filter and then a 2 micron disk filter using 10 psi to 50 psi of pressurized nitrogen. The reactor is washed twice with 50 ml of xylene heated to maintain the temperature of the wash mixture within the designated temperature range and held at that temperature for 20 minutes during each wash cycle. The fractionation process is continued by introducing fresh xylene (200 mL of xylene, stabilized with 600 ppm of BHT) into the reactor, increasing the temperature of the mixture until it reaches the next highest Isolation Temperature Range in the sequence indicated in Table 2 and heating the mixture to maintain its temperature within the specified range for 20 minutes prior to filtering it as described above. The extraction cycle is sequentially repeated in this manner until the mixture has been extracted at all Isolation Temperature Ranges shown in Table 2. The extracts are independently precipitated with methanol to recover the individual polymer fractions.

**Table 2**

| Preparative TREF Fractionation Isolation Temperature Ranges | | |
|---|---|---|
| Chemical Composition Fraction Designation | | Isolation Temperature |
| Cryo Procedure | Standard Procedure | Range (°C) |
| 1 | --- | 0 to 15 |
| 2 | 1 | 15 to 36* |
| 3 | 2 | 36 to 51 |
| 4 | 3 | 51 to 59 |
| 5 | 4 | 59 to 65 |
| 6 | 5 | 65 to 71 |
| 7 | 6 | 71 to 77 |
| 8 | 7 | 77 to 83 |
| 9 | 8 | 83 to 87 |
| 10 | 9 | 87 to 91 |
| 11 | 10 | Greater than 91 |

| | | |
|---|---|---|
| *The Isolation Temperature Range for the Standard Procedure is 0°C to 36°C. | | |

In a preferred embodiment, the polymer produced herein has an Mw (as measured by SEC) of up to 2,000,000 g/mol, preferably from 5000 to 1,000,000 g/mol, preferably 10,000 to 500,000 g/mol, preferably 25,000 to 250,000 g/mol.

In an embodiment, the polymer produced may be isotactic, highly isotactic, syndiotactic, or highly syndiotactic propylene polymer, particularly isotactic polypropylene. As used herein, "isotactic" is defined as having at least 10% isotactic pentads, preferably having at least 40% isotactic pentads of methyl groups derived from propylene according to analysis by ¹³C-NMR. As used herein, "highly isotactic" is defined as having at least 60% isotactic pentads according to analysis by ¹³C-NMR. In a desirable embodiment, the polymer produced has at least 85% isotacticity. As used herein, "syndiotactic" is defined as having at least 10% syndiotactic pentads, preferably at least 40%, according to analysis by ¹³C-NMR. As used herein, "highly syndiotactic" is defined as having at least 60% syndiotactic pentads according to analysis by ¹³C-NMR. In another embodiment, the polymer produced has at least 85% syndiotacticity. Polypropylene microstructure is determined by ¹³C-NMR spectroscopy, including the concentration of isotactic and syndiotactic diads ([m] and [r]), triads ([mm] and [rr]), and pentads ([mmmm] and [rrrr]). The designation "m" or "r" describes the stereochemistry of pairs of contiguous propylene groups, "m" referring to meso and "r" to racemic. Samples are dissolved in d₂-1,1,2,2-tetrachloroethane, and spectra recorded at 125°C using a 100 MHz (or higher) NMR spectrometer. Polymer resonance peaks are referenced to mmmm = 21.8 ppm. Calculations involved in the characterization of polymers by NMR are described by F. A. Bovey in POLYMER CONFORMATION AND CONFIGURATION (Academic Press, New York 1969) and J. Randall in POLYMER SEQUENCE DETERMINATION, 13C-NMR METHOD (Academic Press, New York, 1977). For more information on determining tacticity please see U.S. Patent Application Publication No. 2008/0045638 and the references cited therein.

In a preferred embodiment, "different in tacticity" means that the first and second fractions differ by at least 10%, preferably at least 40%, preferably at least 100% and preferably at least 500%, relative to each other, in % mmmm pentads (if isotactic) or rrrr pentads (if syndiotactic) as determined by ¹³C-NMR.

In a preferred embodiment, the first and second fractions show Mw's (as measured by SEC) that differ by at least 5,000 g/mol, preferably by at least 10,000 g/mol, preferably by at least 25,000 g/mol, preferably by at least 50,000 g/mol, preferably by at least 100,000 g/mol.

By "different in molecular weight distribution" means the polymer has a multimodal molecular weight distribution of polymer species as determined by Size Exclusion Chromatography (SEC). By multimodal is meant that the SEC trace has more than one peak or inflection point. An inflection point is that point where the second derivative of the curve changes in sign (e.g., from negative to positive or vice versa). In a preferred embodiment, the polymer produced herein has a bimodal molecular weight distribution. SEC is measured as set out in U.S. Patent Application Publication No. 2008/0045638, page 36, paragraph [0600]-[0611], including any references cited therein. In another embodiment, the polymer produced herein has a multimodal molecular weight distribution, particularly polymers made of at least two NCA activators where one of the activators is represented by the formula:

Z_{d}⁺(A^{d-})

where Z is a reducible Lewis acid (preferably a triarylcarbonium, preferably triphenylcarbonium); A^{d-} is a non-coordinating anion having the charge d-; and d is 1, 2, or 3.

Likewise, preferably, the first and second fractions show two glass transition temperatures (Tg) that differ by at least 10%, preferably at least 40%, preferably at least 100% and preferably at least 500%, relative to each other. Tg is measured as set out in U.S. Patent Application Publication No. 2008/0045638, page 36, paragraph [0596], including any references cited therein.

In another embodiment, some polymers produced herein have a melt index (as determined by ASTM 1238 D,2.16 kg, 190°C) of 25 dg/min or more, preferably 50 dg/min or more, preferably 100 dg/min or more, more preferably 200 dg/min or more, more preferably 500 dg/min or more, more preferably 2000 dg/min or more.

In another embodiment, the polymer produced herein has a molecular weight distribution (Mw/Mn) of at least 2, preferably at least 5, preferably at least 10, preferably at least 20, preferably at least 50. Alternately, the polymer produced herein has an Mw/Mn of greater than 1 to 100, alternately from 1.5 to 50, alternately from 2 to 20, alternately from 2 to 5.

Unless otherwise stated, melting point (Tm), peak crystallization temperature (Tc), heat of fusion (Hf), and percent crystallinity are determined using the following procedure according to ASTM E 794-85. Differential scanning calorimetric (DSC) data is obtained using a TA Instruments Model 2910 machine or a Perkin-Elmer DSC 7 machine. In the event that the TA Instruments Model 2910 machine and the Perkin-Elmer DSC-7 machine produce different DSC data, the data from the TA Instruments Model 2910 shall be used. Samples weighing approximately 5-10 mg are sealed in aluminum sample pans. The DSC data is recorded by first cooling the sample to -50°C and then gradually heating it to 200°C at a rate of 10°C/minute. The sample is kept at 200°C for 5 minutes before a second cooling-heating cycle is applied. Both the first and second cycle thermal events are recorded. Areas under the melting curves are measured and used to determine the heat of fusion and the degree of crystallinity. The percent crystallinity (X %) is calculated using the formula, X %=[area under the curve (Joules/gram)/B (Joules/gram)]*100, where B is the heat of fusion for the homopolymer of the major monomer component. These values for B are to be obtained from the Polymer Handbook, Fourth Edition, published by John Wiley and Sons, New York 1999. A value of 189 J/g (B) is used as the heat of fusion for 100% crystalline polypropylene. A value of 290 J/g (B) is used as the heat of fusion for 100% crystalline polyethylene. For the semi-crystalline polymers, having appreciable crystallinity, the melting temperature is measured and reported during the second heating cycle (or second melt). For the semi-amorphous polymers, having comparatively low levels of crystallinity, the melting temperature is measured and reported during the first heating cycle. Prior to the DSC measurement, the sample is aged (typically by holding it at ambient temperature for a period up to about 5 days) or annealed to maximize the level of crystallinity.

CDBI is a measure of the composition distribution of monomer within the polymer chains. It is measured as described in WO 93/03093, with the modification that any fractions having a weight-average molecular weight (M_{w}) below 20 kg/mol are ignored in the calculation. In a preferred embodiment, the first and second fractions differ in CDBI, relative to one another, by at least 5%, preferably by at least 10%, preferably by at least 20%.

In a preferred embodiment, the first and second fractions differ in crystallinity, relative to one another, by at least 5%, preferably by at least 10%, preferably by at least 20%.

In another embodiment, the polymer produced herein using mixtures of at least two NCAs has an Mw that is less than the Mw of the polymer produced under the same conditions using the same catalyst and the first NCA alone and is less than the Mw of the polymer produced under the same conditions using the second NCA alone, preferably the Mw of the polymer produced using two NCAs is at least 10,000 g/mol less than the Mw of both of the polymers produced under the same conditions using the NCAs alone, preferably at least 15,000 g/mol less, preferably 20,000 g/mol less, preferably 30,000 g/mol less, preferably at least 40,000 g/mol less, preferably 50,000 g/mol less, preferably 75,000 g/mol less, preferably at least 100,000 g/mol less. For example, if the Mw of polymer made by racdimethylsilylbisindenylhafniumdimethyl and Activator A is 650,000 g/mol and the Mw of the polymer made with racdimethylsilylbisindenylhafniumdimethyl and Activator C under the same conditions is 750,000, then the Mw of the polymer produced using racdimethylsilylbisindenylhafniumdimethyl and Activators A and C under the same conditions is 640,000 g/mol or less.

### Catalyst Systems

A "catalyst system" is a combination of at least one catalyst compound, at least two NCA activators, an optional co-activator, and an optional support material. For the purposes of this invention and the claims thereto, when catalyst systems are described as comprising neutral stable forms of the components, it is well understood by one of ordinary skill in the art, that the ionic form of the component is the form that reacts with the monomers to produce polymers.

In the description herein, the catalyst compound may be described as a catalyst precursor, a pre-catalyst compound, metallocene catalyst or a transition metal compound, and these terms are used interchangeably. A polymerization catalyst system is a catalyst system that can polymerize monomers to polymer. An "anionic ligand" is a negatively charged ligand which donates one or more pairs of electrons to a metal ion. A "neutral donor ligand" is a neutrally charged ligand which donates one or more pairs of electrons to a metal ion.

A metallocene catalyst is defined as an organometallic compound with at least one π-bound cyclopentadienyl moiety (or substituted cyclopentadienyl moiety) and more frequently two π-bound cyclopentadienyl moieties or substituted cyclopentadienyl moieties.

For purposes of this invention and claims thereto in relation to catalyst compounds, the term "substituted" means that a hydrogen group has been replaced with a hydrocarbyl group, a heteroatom, or a heteroatom containing group. For example, methyl cyclopentadiene (Cp) is a Cp group substituted with a methyl group, ethyl alcohol is an ethyl group substituted with an -OH group, and a "substituted hydrocarbyl" is a radical made of carbon and hydrogen where at least one hydrogen is replaced by a heteroatom or heteroatom containing group.

For purposes of this invention and claims thereto, "alkoxides" include those where the alkyl group is a C₁ to C₁₀ hydrocarbyl. The alkyl group may be straight chain, branched, or cyclic. The alkyl group may be saturated or unsaturated. In some embodiments, the alkyl group may comprise at least one aromatic group.

Transition metal compounds suitable as olefin polymerization catalysts by coordination or insertion polymerization in accordance with the invention include the known transition metal compounds useful in traditional Ziegler-Natta coordination polymerization and, as well, the metallocene compounds similarly known to be useful in coordination polymerization, when such compounds are capable of catalytic activation by the activators described in this invention. These will typically include Group 4-10 transition metal compounds wherein at least one metal ligand can be abstracted by the activators, particularly those ligands including hydride, alkyl, and silyl. Ligands capable of abstraction and transition metal compounds comprising them include those metallocenes described in U.S. Patent No. 5,198,401 and WO 92/00333. Syntheses of these compounds are well known from the published literature. Additionally, where the metal ligands include halogen, amido, or alkoxy moieties (for example, biscyclopentadienyl zirconium dichloride) which are not capable of abstraction with the cocatalysts of the invention, they can be converted into suitable ligands via known alkylation reactions with organometallic compounds such as lithium or aluminum hydrides or alkyls, Grignard reagents, etc. See also EP-A1-0 570 982 for the reaction of organoaluminum compounds with dihalo-substituted metallocene compounds prior to addition of activating anion compounds.

Additional description of useful metallocene compounds which comprise, or can be alkylated to comprise, at least one ligand capable of abstraction to form a catalytically active transition metal cation appear in the patent literature, e.g., EP-A-0 129 368; U.S. Pat. Nos. 4,871,705; 4,937,299; 5, 324,800; EP-A-0 418 044; EP-A-0 591 756; WO-A-92/00333; WO-A-94/01471; and WO 97/22635. Such metallocene compounds can be described for this invention as mono- or biscyclopentadienyl substituted Group 3, 4, 5, or 6 transition metal compounds wherein the ancillary ligands may be themselves substituted with one or more groups and may be bridged to each other or may be bridged through a heteroatom to the transition metal. The size and constituency of the ancillary ligands and bridging elements are not critical to the preparation of the ionic catalyst systems of the invention but should be selected in the literature described manner to enhance the polymerization activity and polymer characteristics being sought.

Preferred metallocene compounds useful in the instant invention are represented by the formula:

L AL ^{B}L CᵢMDE

where L^{A} is a substituted cyclopentadienyl or heterocyclopentadienyl ancillary ligand π-bonded to M; L^{B} is a member of the class of ancillary ligands defined for L A, or is J, a heteroatom ancillary ligand σ-bonded to M; the L^{A} and L^{B} ligands may be covalently bridged together through a Group 14 element linking group; L Cᵢ is an optional neutral, non-oxidizing ligand having a dative bond to M (i equals 0 to 3); M is a Group 4 or 5 transition metal (preferably Hf, Zr, or Ti); and D and E are independently monoanionic labile ligands, each having a σ-bond to M, optionally bridged to each other or L^{A} or L^{B}, which can be broken for abstraction purposes by a suitable activator and into which a polymerizable monomer or macromonomer can insert for coordination polymerization.

Representative metallocene compounds that are useful herein include: 1) mono-cyclopentadienyl compounds, such as pentamethylcyclopentadienyltitanium isopropoxide, pentamethylcyclopentadienyltribenzyl titanium, dimethylsilyltetramethylcyclopentadienyl-tert-butylamido titanium dichloride, pentamethylcyclopentadienyl titanium trimethyl, dimethylsilyltetramethylcyclopentadienyl-tert-butylamido zirconium dimethyl, dimethylsilyltetramethylcyclopentadienyl-dodecylamido hafnium dihalide, dimethylsilyltetramethylcyclopentadienyl-dodecylamido hafnium dimethyl, dimethylsilyltetramethylcyclopentadienyl-dodecylamido titanium dimethyl; 2) unbridged biscyclopentadienyl compounds, such as bis(1,3-butyl, methylcyclopentadienyl) zirconium dimethyl, pentamethylcyclopentadienyl-cyclopentadienyl zirconium dimethyl, (tetramethylcyclopentadienyl)(n-propylcyclopentadienyl)zirconium dimethyl; 3) bridged biscyclopentadienyl compounds, such as dimethylsilylbis(tetrahydroindenyl) zirconium dichloride, and silacyclobutyl(tetramethylcyclopentadienyl)(n-propyl-cyclopentadienyl) zirconium dimethyl; 4) bridged bisindenyl compounds, such as dimethylsilylbisindenyl zirconium dichloride, dimethylsilylbisindenyl hafnium dimethyl, dimethylsilylbis(2-methylbenzindenyl) zirconium dichloride, dimethylsilylbis(2-methylbenzindenyl) zirconium dimethyl; 5) fluorenyl ligand-containing compounds, such as diphenylmethyl(fluorenyl) (cyclopentadienyl)zirconium dimethyl; and 6) the additional mono-and biscyclopentadienyl compounds listed and described in U.S. Patent Nos. 5,017,714; 5,324,800; and EP-A-0 591 756.

Preferred metallocenes, for use herein, include metallocene compounds (also referred to as metallocenes, metallocene catalyst precursors, or catalyst precursors), such as cyclopentadienyl derivatives of titanium, zirconium, and hafnium. Useful metallocenes (e.g., titanocenes, zirconocenes, and hafnocenes) may be represented by the following formulae: 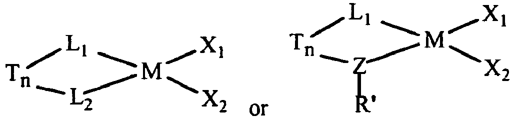
wherein M is the metal center, and is a Group 4 metal, preferably titanium, zirconium or hafnium, preferably zirconium or hafnium when L₁ and L₂ are present and preferably titanium when Z is present;
n is 0 or 1;
T is an optional bridging group which, if present, in preferred embodiments is selected from dialkylsilyl, diarylsilyl, dialkylmethyl, ethylenyl (-CH₂-CH₂-) or hydrocarbylethylenyl wherein one, two, three, or four of the hydrogen atoms in ethylenyl are substituted by hydrocarbyl, where hydrocarbyl can be independently C₁ to C₁₆ alkyl or phenyl, tolyl, xylyl and the like, and when T is present, the catalyst represented can be in a racemic or a meso form;
L₁ and L₂ are the same or different cyclopentadienyl, indenyl, tetrahydroindenyl, or fluorenyl rings, optionally substituted, that are each bonded to M, or L₁ and L₂ are the same or different cyclopentadienyl, indenyl, tetrahydroindenyl, or fluorenyl, which are optionally substituted, in which any two adjacent R groups on these rings are optionally joined to form a substituted or unsubstituted, saturated, partially unsaturated, or aromatic cyclic, or polycyclic substituent;
Z is nitrogen, oxygen, or phosphorus (preferably nitrogen);
R' is a cyclic linear or branched C₁ to C₄₀ alkyl or substituted alkyl group (preferably Z-R' forms a cyclododecylamido group);
X₁ and X₂ are, independently, hydrogen, halogen, hydride radicals, hydrocarbyl radicals, substituted hydrocarbyl radicals, halocarbyl radicals, substituted halocarbyl radicals, silylcarbyl radicals, substituted silylcarbyl radicals, germylcarbyl radicals, or substituted germylcarbyl radicals; or both X are joined and bound to the metal atom to form a metallacycle ring containing from about 3 to about 20 carbon atoms; or both together can be an olefin, diolefin, or aryne ligand.

The term hafnocene describes a bridged or unbridged, bis- or mono-cyclopentadienyl (Cp) hafnium complex having at least two leaving groups X₁ and X₂, which are as defined immediately above and where the Cp groups may be substituted or unsubstituted cyclopentadiene, indene, or fluorene. The term zirconocene describes a bridged or unbridged, bis- or mono-cyclopentadienyl (Cp) zirconium complex having at least two leaving groups X₁ and X₂, which are as defined immediately above and where the Cp groups may be substituted or unsubstituted cyclopentadiene, indene, or fluorene. The term titanocene describes a bridged or unbridged, bis- or mono-cyclopentadienyl (Cp) titanium complex having at least two leaving groups X₁ and X₂, which are as defined immediately above and where the Cp groups may be substituted or unsubstituted cyclopentadiene, indene, or fluorene.

Among the metallocene compounds which can be used in this invention are stereorigid, chiral or asymmetric, bridged or non-bridged, or so-called "constrained geometry" metallocenes. See, for example, U.S. Patent Nos. 4,892,851; 5,017,714; 5,132,281; 5,155,080; 5,296,434; 5,278,264; 5,318,935; 5,969,070; 6,376,409; 6,380,120; 6,376,412; WO-A-(PCT/US92/10066); WO 99/07788; WO-A-93/19103; WO 01/48034; EP-A2-0 577 581; EP-A1-0 578 838; WO 99/29743; and also the academic literature, see e.g., *"*The Influence of Aromatic Substituents on the Polymerization Behavior of Bridged Zirconocene Catalysts", Spaleck, W., et al, Organometallics 1994, 13, pp. 954-963, and "ansa-Zirconocene Polymerization Catalysts with Annelated Ring Ligands-Effects on Catalytic Activity and Polymer Chain Lengths", Brintzinger, H., et al, Organometallics 1994, 13, pp. 964-970, and documents referred to therein. The bridged metallocenes disclosed in WO 99/07788 and the unbridged metallocenes disclosed in U.S. Patent No. 5,969,070 are particularly suitable for the present invention.

Preferably, the transition metal compound is a dimethylsilylbis(indenyl) metallocene, wherein the metal is a Group 4 metal, specifically, titanium, zirconium, or hafnium, and the indenyl may be substituted by one or more substituents selected from the group consisting of a halogen atom, C₁ to C₁₀ alkyl, C₅ to C₁₅ aryl, C₆ to C₂₅ arylalkyl, and C₆ to C₂₅ alkylaryl. More preferably, the metal is zirconium or hafnium, L₁ and L₂ are unsubstituted or substituted indenyl radicals, T is dialkylsiladiyl, and X₁ and X₂ are both halogen or C₁ to C₃ alkyl. Preferably, these compounds are in the rac-form.

Illustrative examples of preferred metallocene compounds include dimethylsilylbis(indenyl) metal dichloride, -diethyl or -dimethyl, wherein the metal is titanium, zirconium, or hafnium, preferably hafnium or zirconium. In some embodiments, the indenyl radicals are not substituted by any further substituents; however, in certain embodiments the two indenyl groups may also be replaced, independently of each other, by 2-methyl-4-phenylindenyl; 2-methyl indenyl; 2-methyl,4-[3',5'-di-t-butylphenyl]indenyl; 2-ethyl-4-[3',5'-di-t-butylphenyl]indenyl; 2-n-propyl-4-[3',5'-di-t-butylphenyl]indenyl; 2-iso-propyl-4-[3',5'-di-t-butylphenyl]indenyl; 2-iso-butyl-4-[3',5'-di-t-butylphenyl]indenyl; 2-n-butyl-4-[3',5'-di-t-butylphenyl]indenyl; 2-sec-butyl-4-[3',5'-di-t-butylphenyl]indenyl; 2-methyl-4-[3',5'-di-phenylphenyl]indenyl; 2-ethyl-4-[3',5'-di-phenylphenyl]indenyl; 2-n-propyl-4-[3',5'-di-phenylphenyl]indenyl; 2-iso-propyl-4-[3',5'-di-phenylphenyl]indenyl; 2-n-butyl-4-[3',5'-di-phenylphenyl]indenyl; 2-sec-butyl-4-[3',5'-di-phenylphenyl]indenyl; 2-tert-butyl-4-[3',5'-di-phenylphenyl]indenyl; and the like. Further illustrative, but not limiting examples of preferred metallocene compounds are the racemic isomers of 9-silafluorenylbis(indenyl) metal dichloride, -diethyl or -dimethyl, wherein the metal is titanium, zirconium, or hafnium.

Particularly preferred metallocenes as transition metal compounds for use in the catalyst systems of the present invention together with the activators described above for use in polymerizing olefins are rac-dimethylsilylbis(indenyl) hafnocenes or -zirconocenes, rac-dimethylsilylbis(2-methyl-4-phenylindenyl) hafnocenes or -zirconocenes, rac-dimethylsilylbis(2-methyl-indenyl) hafnocenes or -zirconocenes, and rac-dimethylsilylbis(2-methyl-4-naphthylindenyl) hafnocenes or -zirconocenes, wherein the hafnium and zirconium metal is substituted, in addition to the bridged bis(indenyl) substituent, by two further substituents, which are halogen, preferably chlorine or bromine atoms, or alkyl groups, preferably methyl and/or ethyl groups. Preferably, these additional substituents are both chlorine atoms or both methyl groups. Particularly preferred transition metal compounds are dimethylsilylbis(indenyl)hafnium dimethyl, rac-dimethylsilylbis(indenyl)zirconium dimethyl, rac-ethylenylbis(indenyl)zirconium dimethyl, and rac-ethylenylbis(indenyl)hafnium dimethyl.

Illustrative examples of additional useful metallocene catalysts are: [dimethylsilanediyl(tetramethylcyclopentadienyl)-(cyclododecylamido)]metal dihalide, [dimethylsilanediyl(tetramethylcyclopentadienyl)(t-butylamido)]metal dihalide, [dimethylsilanediyl(tetramethylcyclopentadienyl)(exo-2-norbornyl)]metal dihalide, wherein the metal is Zr, Hf, or Ti, preferably Ti, and the halide is preferably chlorine or bromine.

In a preferred embodiment, the transition metal compound is a bridged or unbridged bis(substituted or unsubstituted indenyl) hafnium dialkyl or dihalide.

Finally, non-metallocene compounds that are active in catalyzing olefin polymerization reactions are suitable as the transition metal compound in the catalyst systems and the processes of the present invention. A particularly preferred species of non-metallocene catalysts includes the pyridyl amines disclosed, e.g., in WO 03/040201.

Additional organometallic transition metal compounds suitable as olefin polymerization catalysts in accordance with the invention will be any of those Group 4-10 that can be converted by ligand abstraction into a catalytically active cation and stabilized in that active electronic state by a noncoordinating or weakly coordinating anion sufficiently labile to be displaced by an olefinically unsaturated monomer such as ethylene. Exemplary compounds include those described in the patent literature. U.S. Patent No. 5,318,935 describes bridged and unbridged bisamido transition metal catalyst compounds of Group 4 metals capable of insertion polymerization of α-olefins. International Patent Publications WO 96/23010; WO 97/48735; and Gibson, et. al., Chem. Comm., pp. 849-850 (1998), disclose diimine-based ligands for Group 8-10 metal compounds shown to be suitable for ionic activation and olefin polymerization. See also WO 97/48735. Transition metal polymerization catalyst systems from Group 5-10 metals wherein the active transition metal center is in a high oxidation state and stabilized by low coordination number polyanionic ancillary ligand systems are described in U.S. Patent No. 5,502,124 and its divisional U.S. Patent No. 5,504,049. Bridged bis(arylamido) Group 4 compounds for olefin polymerization are described by D. H. McConville, et al, in Organometallics 1995, 14, pp. 5478-5480. Synthesis methods and compound characterization are presented. Further work appearing in D. H. McConville, et al, Macromolecules 1996, 29, pp. 5241-5243, described the bridged bis(arylamido) Group 4 compounds are active catalysts for polymerization of 1-hexene. Additional transition metal compounds suitable in accordance with the invention include those described in WO 96/40805. Each of these documents is incorporated by reference for the purposes of U.S. patent practice.

In a preferred embodiment herein, the catalyst system comprises at least two activators and at least one metallocene compound represented by the formula: 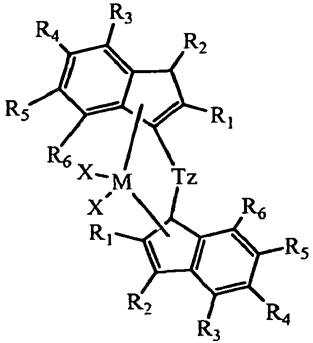 where:
M is hafnium or zirconium, preferably hafnium; z is 0 or 1 indicating the presence or absence of a bridging group, each X is, independently, selected from the group consisting of hydrocarbyl radicals having from 1 to 20 carbon atoms, hydrides, amides, alkoxides, sulfides, phosphides, halides, dienes, amines, phosphines, ethers, and a combination thereof, (two X's may form a part of a fused ring or a ring system), preferably each X is independently selected from halides and C₁ to C₁₂ alkyl or aromatic group, preferably each X is a methyl or benzyl group; each R₁ is, independently, hydrogen, or a C₁ to C₁₀ alkyl group, preferably hydrogen, methyl, ethyl, propyl, butyl, pentyl, hexyl, or isomers thereof, preferably each R₁ is a methyl group (preferably when z is 0, R₁ is H); each R₂, R₃, R₄, R₅, and R₆ is, independently, hydrogen or a substituted hydrocarbyl group or unsubstituted hydrocarbyl group, or a heteroatom, preferably each R₄, R₅, and R₆ is hydrogen; T is a bridging group, preferably T comprises Si, Ge, or C, preferably T is dialkyl silicon or dialkyl germanium, preferably T is dimethyl silicon; and further provided that any of adjacent R₄, R₅, and R₆ groups may form a fused ring or multicenter fused ring system where the rings may be aromatic, partially saturated or saturated.

Examples of bridging group T useful herein may be represented by R'₂C, R'₂Si, R'₂Ge, R'₂CCR'₂, R'₂CCR'₂CR'₂, R'₂CCR'₂CR'₂CR'₂, R'C=CR', R'C=CR'CR'₂, R'₂CCR'=CR'CR'₂, R'C=CR'CR'=CR', R'C=CR'CR'₂CR'₂, R'₂CSiR'₂, R'₂SiSiR'₂, R₂CSiR'₂CR'₂, R'₂SiCR'₂SiR'₂, R'C=CR'SiR'₂, R'₂CGeR'₂, R'₂GeGeR'₂, R'₂CGeR'₂CR'₂, R'₂GeCR'₂GeR'₂, R'₂SiGeR'₂, R'C=CR'GeR'₂, R'B, R'₂C-BR', R'₂C-BR'-CR'₂, R'₂C-O-CR'₂, R'₂CR'₂C-O-CR'₂CR'₂, R'₂C-O-CR'₂CR'₂, R'₂C-O-CR'=CR', R'₂C-S-R'₂, R'₂CR'₂C-S-CR'₂CR'₂, R'₂C-S-CR'₂CR'₂, R'₂C-S-R'=CR', R'₂C-Se-CR'_{2'} R'₂CR'₂C-Se-CR'₂CR'₂, R'₂C-Se-CR₂CR'₂, R'₂C-Se-CR'=CR', R'₂C-N=CR', R'₂C-NR'-CR'₂, R'₂C-NR'-CR'₂CR'₂, R'₂C-NR'-CR'=CR', R'₂CR'₂C-NR'-CR'₂CR'₂, R'₂C-P=CR', and R'₂C-PR'-CR'₂ where R' is hydrogen or a C₁ to C₂₀ containing hydrocarbyl, substituted hydrocarbyl, halocarbyl, substituted halocarbyl, silylcarbyl or germylcarbyl substituent, and optionally two or more adjacent R' may join to form a substituted or unsubstituted, saturated, partially unsaturated or aromatic, cyclic or polycyclic substituent. Preferably, T is a bridging group comprising carbon or silica, such as dialkylsilyl, preferably T is selected from CH₂, CH₂CH₂, C(CH₃)₂, SiMe₂, SiPh₂, SiMePh, silylcyclobutyl (Si(CH₂)₃), (Ph)₂C, (p-(Et)₃SiPh)₂C, and silylcyclopentyl (Si(CH₂)₄).

Preferably T is represented by the formula R₂^{a}J, where J is C, Si, or Ge, and each R^{a} is, independently, hydrogen, halogen, C₁ to C₂₀ hydrocarbyl or a C₁ to C₂₀ substituted hydrocarbyl, and two R^{a} can form a cyclic structure including aromatic, partially saturated, or saturated cyclic or fused ring system.

Metallocene compounds that are particularly useful in this invention include one or more of: dimethylsilylbis(indenyl)hafnium dimethyl; dimethylsilylbis(indenyl)zirconium dimethyl; dimethylsilylbis(2-methyl 4-phenylindenyl)hafnium dimethyl; dimethylsilylbis(2-methyl 4-phenylindenyl)zirconium dimethyl; bis(n-propyl-cyclopentadienyl)hafnium dimethyl; bis(n-propyl-cyclopentadienyl)zirconium dimethyl; dimethylsilylbis(2-methylindenyl)hafnium dimethyl; and dimethylsilylbis(2-methylindenyl)zirconium dimethyl. In an alternate embodiment, the "dimethyl," after the transition metal in the list of catalyst compounds above is replaced with a dihalide (such as dichloride or difluoride) or a bisphenoxide.

### Non Coordinating Anion Activators

The catalyst systems of this invention include at least two non-coordinating anion activators. Specifically the catalyst systems include two NCAs which either do not coordinate to a cation or which only weakly coordinate to a cation thereby remaining sufficiently labile to be displaced during polymerization.

The terms "cocatalyst" and "activator" are used herein interchangeably and are defined to be any compound which can activate any one of the catalyst compounds described above by converting the neutral catalyst compound to a catalytically active catalyst compound cation.

In a preferred embodiment, little or no alumoxane is used in the process to produce the polymers herein. Preferably, alumoxane is present at zero mol%, alternately the alumoxane is present at a molar ratio of aluminum to transition metal of less than 500:1, preferably less than 300:1, preferably less than 100:1, or preferably less than 1:1.

### Ionizing Activators

Activators useful herein include ionizing activators, which may be neutral or ionic. Preferred activators typically include ionizing anion precursor compounds that abstract one reactive, σ-bound, metal ligand making the metal complex cationic and providing a charge-balancing noncoordinating or weakly coordinating anion.

It is within the scope of this invention to use an ionizing or stoichiometric activator, neutral or ionic, such as tri (n-butyl) ammonium tetrakis (pentafluorophenyl) boron, a trisperfluorophenyl boron metalloid precursor or a trisperfluoronaphtyl boron metalloid precursor, polyhalogenated heteroborane anions (WO 98/43983), boric acid (U.S. Patent No. 5,942,459) or combination thereof.

Examples of neutral stoichiometric activators include tri-substituted boron, tellurium, aluminum, gallium and indium, or mixtures thereof. The three substituent groups are each independently selected from alkyls, alkenyls, halogen, substituted alkyls, aryls, arylhalides, alkoxy and halides. Preferably, the three groups are independently selected from halogen, mono- or multicyclic (including halosubstituted) aryls, alkyls, and alkenyl compounds and mixtures thereof, preferred are alkenyl groups having 1 to 20 carbon atoms, alkyl groups having 1 to 20 carbon atoms, alkoxy groups having 1 to 20 carbon atoms and aryl groups having 3 to 20 carbon atoms (including substituted aryls). More preferably, the three groups are alkyls having 1 to 4 carbon groups, phenyl, naphthyl, or mixtures thereof. Even more preferably, the three groups are halogenated, preferably fluorinated, aryl groups. Most preferably, the neutral stoichiometric activator is trisperfluorophenyl boron or trisperfluoronaphthyl boron.

Ionic stoichiometric activator compounds may contain an active proton, or some other cation associated with, but not coordinated to, or only loosely coordinated to, the remaining ion of the ionizing compound. Such compounds and the like are described in European publications EP-A-0 570 982; EP-A-0 520 732; EP-A-0 495 375; EP-B1-0 500 944; EP-A-0 277 003; EP-A-0 277 004; U.S. Patent Nos. 5,153,157; 5,198,401; 5,066,741; 5,206,197; 5,241,025; 5,384,299; 5,502,124; and U.S. Patent Application Serial No. 08/285,380, filed August 3, 1994.

Ionic catalysts can be prepared by reacting a transition metal compound with some neutral Lewis acids, such as B(C₆F₆)₃, which upon reaction with the hydrolyzable ligand (X) of the transition metal compound forms an anion, such as ([B(C₆F₅)₃(X)]⁻), which stabilizes the cationic transition metal species generated by the reaction. The catalysts can be, and preferably are, prepared with activator components which are ionic compounds or compositions. However, preparation of activators utilizing neutral compounds is also contemplated by this invention.

Compounds useful as an activator component in the preparation of the ionic catalyst systems used in the process of this invention comprise a cation, which is preferably a Bronsted acid capable of donating a proton, and a compatible non-coordinating anion which anion is relatively large (bulky), capable of stabilizing the active catalyst species (the Group 4 cation) which is formed when the two compounds are combined and said anion will be sufficiently labile to be displaced by olefinic, diolefinic, and acetylenically unsaturated substrates or other neutral Lewis bases, such as ethers, nitriles, and the like. Two classes of compatible non-coordinating anions have been disclosed in EPA 277,003 and EPA 277,004 published 1988: 1) anionic coordination complexes comprising a plurality of lipophilic radicals covalently coordinated to and shielding a central charge-bearing metal or metalloid core; and 2) anions comprising a plurality of boron atoms, such as carboranes, metallacarboranes and boranes.

In a preferred embodiment, the stoichiometric activators include a cation and an anion component, and may be represented by the following formula:

Z_{d}⁺ (A^{d-}) (14)

where: Z is (L-H) or a reducible Lewis acid; L is a neutral Lewis base; H is hydrogen; (L-H) is a Bronsted acid; A^{d-} is a non-coordinating anion having the charge d-; and d is 1, 2, or 3.

The cation component, Z_{d}⁺ may include Bronsted acids such as protons or protonated Lewis bases or reducible Lewis acids capable of protonating or abstracting a moiety, such as an alkyl or aryl, from the bulky ligand metallocene containing transition metal catalyst precursor, resulting in a cationic transition metal species.

The activating cation Z_{d}⁺ may also be a moiety such as silver, tropylium, carboniums, ferroceniums and mixtures, preferably carboniums and ferroceniums. Most preferably Z_{d}⁺ is triphenyl carbonium. Preferred reducible Lewis acids can be any triaryl carbonium (where the aryl can be substituted or unsubstituted, such as those represented by the formula: (Ar₃C⁺), where Ar is aryl or aryl substituted with a heteroatom, a C₁ to C₄₀ hydrocarbyl, or a substituted Cl to C40 hydrocarbyl), preferably the reducible Lewis acids in formula (14) above as "Z" include those represented by the formula: (Ph₃C), where Ph is a substituted or unsubstituted phenyl, preferably substituted with C₁ to C₄₀ hydrocarbyls or substituted a C₁ to C₄₀ hydrocarbyls, preferably C₁ to C₂₀ alkyls or aromatics or substituted C₁ to C₂₀ alkyls or aromatics, preferably Z is a triphenylcarbonium.

When Z_{d}⁺ is the activating cation (L-H)_{d}⁺, it is preferably a Bronsted acid, capable of donating a proton to the transition metal catalytic precursor resulting in a transition metal cation, including ammoniums, oxoniums, phosphoniums, silyliums, and mixtures thereof, preferably ammoniums of methylamine, aniline, dimethylamine, diethylamine, N-methylaniline, diphenylamine, trimethylamine, triethylamine, N,N-dimethylaniline, methyldiphenylamine, pyridine, p-bromo N,N-dimethylaniline, p-nitro-N,N-dimethylaniline, phosphoniums from triethylphosphine, triphenylphosphine, and diphenylphosphine, oxomiuns from ethers such as dimethyl ether diethyl ether, tetrahydrofuran and dioxane, sulfoniums from thioethers, such as diethyl thioethers, tetrahydrothiophene, and mixtures thereof.

The anion component A^{d-} includes those having the formula [M^{k+}Qₙ]^{d-} wherein k is 1, 2, or 3; n is 1, 2, 3, 4, 5, or 6 (preferably 1, 2, 3, or 4); n - k = d; M is an element selected from Group 13 of the Periodic Table of the Elements, preferably boron or aluminum, and Q is independently a hydride, bridged or unbridged dialkylamido, halide, alkoxide, aryloxide, hydrocarbyl, substituted hydrocarbyl, halocarbyl, substituted halocarbyl, and halosubstituted-hydrocarbyl radicals, said Q having up to 20 carbon atoms with the proviso that in not more than 1 occurrence is Q a halide. Preferably, each Q is a fluorinated hydrocarbyl group having 1 to 20 carbon atoms, more preferably each Q is a fluorinated aryl group, and most preferably each Q is a pentafluoryl aryl group. Examples of suitable A^{d-} also include diboron compounds as disclosed in U.S. Patent No. 5,447,895, which is fully incorporated herein by reference.

Illustrative examples of boron compounds which may be used as an activating cocatalyst in this invention are tri-substituted ammonium salts such as: trimethylammonium tetraphenylborate, triethylammonium tetraphenylborate, tripropylammonium tetraphenylborate, tri(n-butyl)ammonium tetraphenylborate, tri(t-butyl)ammonium tetraphenylborate, N,N-dimethylanilinium tetraphenylborate, N,N-diethylanilinium tetraphenylborate, N,N-dimethyl-(2,4,6-trimethylanilinium) tetraphenylborate, tropillium tetraphenylborate, triphenylcarbenium tetraphenylborate, triphenylphosphonium tetraphenylborate, triethylsilylium tetraphenylborate, benzene(diazonium)tetraphenylborate, trimethylammonium tetrakis(pentafluorophenyl)borate, triethylammonium tetrakis(pentafluorophenyl)borate, tripropylammonium tetrakis(pentafluorophenyl)borate, tri(n-butyl)ammonium tetrakis(pentafluorophenyl)borate, tri(sec-butyl)ammonium tetrakis(pentafluorophenyl)borate, N,N-dimethylanilinium tetrakis(pentafluorophenyl)borate, N,N-diethylanilinium tetrakis(pentafluorophenyl)borate, N,N-dimethyl-(2,4,6-trimethylanilinium) tetrakis(pentafluorophenyl)borate, tropillium tetrakis(pentafluorophenyl)borate, triphenylcarbenium tetrakis(pentafluorophenyl)borate, triphenylphosphonium tetrakis(pentafluorophenyl)borate, triethylsilylium tetrakis(pentafluorophenyl)borate, benzene(diazonium) tetrakis(pentafluorophenyl)borate, trimethylammonium tetrakis-(2,3,4,6-tetrafluorophenyl) borate, triethylammonium tetrakis-(2,3,4,6-tetrafluorophenyl)borate, tripropylammonium tetrakis-(2,3,4,6-tetrafluorophenyl)borate, tri(n-butyl)ammonium tetrakis-(2,3,4,6-tetrafluoro-phenyl)borate, dimethyl(t-butyl)ammonium tetrakis-(2,3,4,6-tetrafluorophenyl)borate, N,N-dimethylanilinium tetrakis-(2,3,4,6-tetrafluorophenyl)borate, N,N-diethylanilinium tetrakis-(2,3,4,6-tetrafluorophenyl)borate, N,N-dimethyl-(2,4,6-trimethylanilinium) tetrakis-(2,3,4,6-tetrafluorophenyl)borate, tropillium tetrakis-(2,3,4,6-tetrafluorophenyl)borate, triphenylcarbenium tetrakis-(2,3,4,6-tetrafluorophenyl)borate, triphenylphosphonium tetrakis-(2,3,4,6-tetrafluorophenyl)borate, triethylsilylium tetrakis-(2,3,4,6-tetrafluorophenyl)borate, benzene(diazonium) tetrakis-(2,3,4,6-tetrafluorophenyl)borate, trimethylammonium tetrakis(perfluoronaphthyl)borate, triethylammonium tetrakis(perfluoronaphthyl)borate, tripropylammonium tetrakis(perfluoronaphthyl)borate, tri(n-butyl)ammonium tetrakis(perfluoronaphthyl)borate, tri(t-butyl)ammonium tetrakis(perfluoronaphthyl)borate, N,N-dimethylanilinium tetrakis(perfluoronaphthyl)borate, N,N-diethylanilinium tetrakis(perfluoronaphthyl)borate, N,N-dimethyl-(2,4,6-trimethylanilinium) tetrakis(perfluoronaphthyl)borate, tropillium tetrakis(perfluoronaphthyl)borate, triphenylcarbenium tetrakis(perfluoronaphthyl)borate, triphenylphosphonium tetrakis(perfluoronaphthyl)borate, triethylsilylium tetrakis(perfluoronaphthyl)borate, benzene(diazonium) tetrakis(perfluoronaphthyl)borate, trimethylammonium tetrakis(perfluorobiphenyl)borate, triethylammonium tetrakis(perfluorobiphenyl)borate, tripropylammonium tetrakis(perfluorobiphenyl)borate, tri(n-butyl)ammonium tetrakis(perfluorobiphenyl)borate, tri(t-butyl)ammonium tetrakis(perfluorobiphenyl)borate, N,N-dimethylanilinium tetrakis(perfluorobiphenyl)borate, N,N-diethylanilinium tetrakis(perfluorobiphenyl)borate, N,N-dimethyl-(2,4,6-trimethylanilinium) tetrakis(perfluorobiphenyl)borate, tropillium tetrakis(perfluorobiphenyl)borate, triphenylcarbenium tetrakis(perfluorobiphenyl)borate, triphenylphosphonium tetrakis(perfluorobiphenyl)borate, triethylsilylium tetrakis(perfluorobiphenyl)borate, benzene(diazonium) tetrakis(perfluorobiphenyl)borate, trimethylammonium tetrakis(3,5-bis(trifluoromethyl)phenyl)borate, triethylammonium tetrakis(3,5-bis(trifluoromethyl)phenyl)borate, tripropylammonium tetrakis(3,5-bis(trifluoromethyl)phenyl)borate, tri(n-butyl)ammonium tetrakis(3,5-bis(trifluoromethyl)phenyl)borate, tri(t-butyl)ammonium tetrakis(3,5-bis(trifluoromethyl)phenyl)borate, N,N-dimethylanilinium tetrakis(3,5-bis(trifluoromethyl)phenyl)borate, N,N-diethylanilinium tetrakis(3,5-bis(trifluoromethyl)phenyl)borate, N,N-dimethyl-(2,4,6-trimethylanilinium) tetrakis(3,5-bis(trifluoromethyl)phenyl)borate, tropillium tetrakis(3,5-bis(trifluoromethyl)phenyl)borate, triphenylcarbenium tetrakis(3,5-bis(trifluoromethyl)phenyl)borate, triphenylphosphonium tetrakis(3,5-bis(trifluoromethyl)phenyl)borate, triethylsilylium tetrakis(3,5-bis(trifluoromethyl)phenyl)borate, benzene(diazonium) tetrakis(3,5-bis(trifluoromethyl)phenyl)borate; and dialkyl ammonium salts such as: di-(i-propyl)ammonium tetrakis(pentafluorophenyl)borate, and dicyclohexylammonium tetrakis(pentafluorophenyl)borate; and additional tri-substituted phosphonium salts, such as tri(o-tolyl)phosphonium tetrakis(pentafluorophenyl)borate, and tri(2,6-dimethylphenyl)phosphonium tetrakis(pentafluorophenyl)borate.

Most preferably, the ionic stoichiometric activator Z_{d}⁺ (A^{d-}) is N,N-dimethylanilinium tetra(perfluorophenyl)borate, N,N-dimethylanilinium tetrakis(perfluoronaphthyl)borate, N,N-dimethylanilinium tetrakis(perfluorobiphenyl)borate, N,N-dimethylanilinium tetrakis(3,5-bis(trifluoromethyl)phenyl)borate, triphenylcarbenium tetrakis(perfluoronaphthyl)borate, triphenylcarbenium tetrakis(perfluorobiphenyl)borate, triphenylcarbenium tetrakis(3,5-bis(trifluoromethyl)phenyl)borate, or triphenylcarbenium tetra(perfluorophenyl)borate.

In one embodiment, an activation method using ionizing ionic compounds not containing an active proton but capable of producing a bulky ligand metallocene catalyst cation and their non-coordinating anion is used and is described in EP 0 426 637 A; EP 0 573 403 A; and US 5,387,568.

Useful invention processes also can employ cocatalyst compounds or activator compounds that are initially neutral Lewis acids but form a cationic metal complex and a noncoordinating anion, or a zwitterionic complex upon reaction with the invention compounds. For example, tris(pentafluorophenyl) boron or aluminum act to abstract a hydrocarbyl or hydride ligand to yield an invention cationic metal complex and stabilizing noncoordinating anion, see EP-A-0 427 697 and EP-A-0 520 732 for illustrations of analogous Group-4 metallocene compounds. Also, see the methods and compounds of EP-A-0 495 375. For formation of zwitterionic complexes using analogous Group 4 compounds, see U.S. Patents 5,624,878; 5,486,632; and 5,527,929.

When the cations of noncoordinating anion precursors are Bronsted acids, such as protons or protonated Lewis bases (excluding water), or reducible Lewis acids, such as carboniums, ferrocenium or silver cations, or alkali or alkaline earth metal cations, such as those of sodium, magnesium, or lithium, the catalyst-precursor-to-activator molar ratio may be any ratio.

Bulky activators are also useful herein as NCAs. "Bulky activator" as used herein refers to anionic activators represented by the formula: 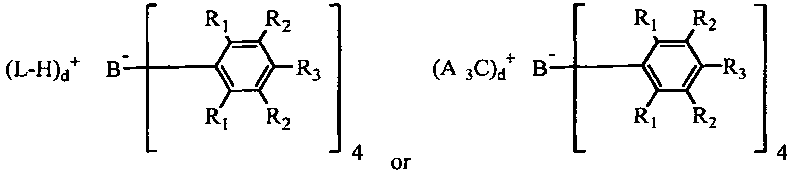 where:
each R₁ is, independently, a halide, preferably a fluoride;
Ar is substituted or unsubstituted aryl group (preferably a substituted or unsubstituted phenyl), preferably substituted with C₁ to C₄₀ hydrocarbyls, preferably C₁ to C₂₀ alkyls or aromatics;
each R₂ is, independently, a halide, a C₆ to C₂₀ substituted aromatic hydrocarbyl group or a siloxy group of the formula -O-Si-Rₐ, where Rₐ is a C₁ to C₂₀ hydrocarbyl or hydrocarbylsilyl group (preferably R₂ is a fluoride or a perfluorinated phenyl group);
each R³ is a halide, C₆ to C₂₀ substituted aromatic hydrocarbyl group or a siloxy group of the formula -O-Si-Rₐ, where Rₐ is a C₁ to C₂₀ hydrocarbyl or hydrocarbylsilyl group (preferably R³ is a fluoride or a C₆ perfluorinated aromatic hydrocarbyl group); wherein R₂ and R³ can form one or more saturated or unsaturated, substituted or unsubstituted rings (preferably R₂ and R³ form a perfluorinated phenyl ring); and
L is an neutral Lewis base; (L-H)⁺is a Bronsted acid; d is 1,2, or 3;
wherein the anion has a molecular weight of greater than 1020 g/mol;
wherein at least three of the substituents on the B atom each have a molecular volume of greater than 250 cubic A, alternately greater than 300 cubic A, or alternately greater than 500 cubic A.

Preferably (Ar₃C)_{d}⁺ is (Ph₃C)_{d}⁺, where Ph is a substituted or unsubstituted phenyl, preferably substituted with C₁ to C₄₀ hydrocarbyls or substituted C₁ to C₄₀ hydrocarbyls, preferably C₁ to C₂₀ alkyls or aromatics or substituted C₁ to C₂₀ alkyls or aromatics.

"Molecular volume" is used herein as an approximation of spatial steric bulk of an activator molecule in solution. Comparison of substituents with differing molecular volumes allows the substituent with the smaller molecular volume to be considered "less bulky" in comparison to the substituent with the larger molecular volume. Conversely, a substituent with a larger molecular volume may be considered "more bulky" than a substituent with a smaller molecular volume.

Molecular volume may be calculated as reported in "A Simple "Back of the Envelope" Method for Estimating the Densities and Molecular Volumes of Liquids and Solids," Journal of Chemical Education, Vol. 71, No. 11, November 1994, pp. 962-964. Molecular volume (MV), in units of cubic A, is calculated using the formula: MV = 8.3Vₛ, where Vₛ is the scaled volume. Vₛ is the sum of the relative volumes of the constituent atoms, and is calculated from the molecular formula of the substituent using the following table of relative volumes. For fused rings, the Vₛ is decreased by 7.5% per fused ring.

| Element | Relative Volume |
|---|---|
| H | 1 |
| 1^{st} short period, Li to F | 2 |
| 2^{nd} short period, Na to Cl | 4 |
| 1^{st} long period, K to Br | 5 |
| 2^{nd} long period, Rb to I | 7.5 |
| 3^{rd} long period, Cs to Bi | 9 |

Exemplary bulky substituents of activators suitable herein and their respective scaled volumes and molecular volumes are shown in the table below. The dashed bonds indicate binding to boron, as in the general formula above.

| Activator | Structure of boron substituents | Molecular Formula of each substituent | V_{S} | MV Per subst. (Å³) | Total MV (Å³) |
|---|---|---|---|---|---|
| Dimethylanilinium tetrakis(perfluoronaphthyl)borate | 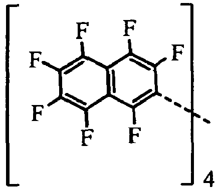 | C₁₀F₇ | 34 | 261 | 1044 |
| Dimethylanilinium tetrakis(perfluorobiphenyl)borate | 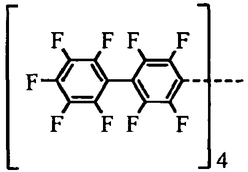 | C₁₂F₉ | 42 | 349 | 1396 |
| [4-tButyl-PhNMe₂H] [(C₆F₃(C₆F₅)₂)₄^{B}] | 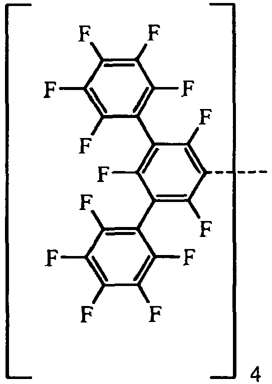 | C₁₈F₁₃ | 62 | 515 | 2060 |

Exemplary bulky activators useful in catalyst systems herein include: trimethylammonium tetrakis(perfluoronaphthyl)borate, triethylammonium tetrakis(perfluoronaphthyl)borate, tripropylammonium tetrakis(perfluoronaphthyl)borate, tri(n-butyl)ammonium tetrakis(perfluoronaphthyl)borate, tri(t-butyl)ammonium tetrakis(perfluoronaphthyl)borate, N,N-dimethylanilinium tetrakis(perfluoronaphthyl)borate, N,N-diethylanilinium tetrakis(perfluoronaphthyl)borate, N,N-dimethyl-(2,4,6-trimethylanilinium) tetrakis(perfluoronaphthyl)borate, tropillium tetrakis(perfluoronaphthyl)borate, triphenylcarbenium tetrakis(perfluoronaphthyl)borate, triphenylphosphonium tetrakis(perfluoronaphthyl)borate, triethylsilylium tetrakis(perfluoronaphthyl)borate, benzene(diazonium) tetrakis(perfluoronaphthyl)borate, trimethylammonium tetrakis(perfluorobiphenyl)borate, triethylammonium tetrakis(perfluorobiphenyl)borate, tripropylammonium tetrakis(perfluorobiphenyl)borate, tri(n-butyl)ammonium tetrakis(perfluorobiphenyl)borate, tri(t-butyl)ammonium tetrakis(perfluorobiphenyl)borate, N,N-dimethylanilinium tetrakis(perfluorobiphenyl)borate, N,N-diethylanilinium tetrakis(perfluorobiphenyl)borate, N,N-dimethyl-(2,4,6-trimethylanilinium) tetrakis(perfluorobiphenyl)borate, tropillium tetrakis(perfluorobiphenyl)borate, triphenylcarbenium tetrakis(perfluorobiphenyl)borate, triphenylphosphonium tetrakis(perfluorobiphenyl)borate, triethylsilylium tetrakis(perfluorobiphenyl)borate, benzene(diazonium) tetrakis(perfluorobiphenyl)borate, [4-t-butyl-PhNMe₂H][(C₆F₃(C₆F₅)₂)₄B], and the activators disclosed in U.S. Patent No. 7,297,653.

In another embodiment, one or more of the NCAs is chosen from the activators described in U.S. Patent No. 6,211,105. Specifically the anion of the NCAs comprises a Group 13 element cocatalyst complex comprising at least one halogenated, nitrogen-containing aromatic group ligand. The Group 13 element cocatalyst complex can be a neutral, three-coordinate Lewis acid compound or it can be an ionic salt comprising a four-coordinate Group 13 element anionic complex, each containing at least one halogenated aromatic ligand having at least one nitrogen atom in the aromatic ring. Preferred Group 13 element cocatalyst complexes comprising at least one halogenated, nitrogen-containing aromatic group ligand are preferably represented by the formula:

RₙM(ArNHal)₄₋ₙ (I)

where R is a monoanionic ligand, M is a Group 13 metal or metalloid, preferably aluminum or boron, ArNHal is a halogenated, nitrogen-containing aromatic ring, polycyclic aromatic ring or aromatic ring assembly in which two or more rings (or fused ring systems) are joined directly to one another or together, and n is 0, 1, 2, or 3. Suitable R ligands include: substituted or unsubstituted C₁ to C₃₀ hydrocarbyl aliphatic or aromatic groups, substituted meaning that at least one hydrogen on a carbon atom is replaced with a hydrocarbyl, halide, halocarbyl, hydrocarbyl or halocarbyl substituted organometalloid, dialkylamido, alkoxy, aryloxy, alkysulfido, arylsulfido, alkylphosphido, alkylphosphido, or other anionic substituent; fluoride; bulky alkoxides, where bulky refers to C₄ and higher number hydrocarbyl groups, e.g., up to about C₂₀, such as tert-butoxide and 2,6-dimethylphenoxide, and 2,6-di(tert-butyl)phenoxide; --SR ¹; --NR ²₂, and --PR ³₂, where each R is independently a substituted or unsubstituted hydrocarbyl as defined above; and C₁ to C₃₀ hydrocarbyl substituted organometalloid, such as trimethylsilyl, methyl trimethylsilyl, etc. Preferred examples of R include the halogenated phenyl, naphthyl, and anthracenyl radicals of U.S. Patent No. 5,198,401 and the halogenated biphenyl radicals of WO 97/29845. The use of the terms halogenated or halogenation means that at least one third of hydrogen atoms on carbon atoms of the aryl-substituted aromatic ligands are replaced by halogen atoms, and more preferred that the aromatic ligands be perhalogenated. Fluorine is a preferred halogen.

In a preferred embodiment, ArNHal is a halogenated (preferably Cl, Br, F, preferably F), nitrogen-containing aromatic ring, polycyclic aromatic ring or aromatic ring assembly in which two or more rings (or fused ring systems) are joined directly to one another or together, preferably ArNHal is tetrafluoropyridine, hexafluoroquinoline, and/or hexafluoroisoquinoline.

Preferred Group 13 element activators useful herein are derived from an ionic salt, comprising a 4-coordinate Group 13 element anionic complex, that can be represented as:

[Ct] +[Rₙ*M(ArNHal)_{4-n*}]- (II)

where [Ct]⁺ is a is a suitable cation that is essentially non-interfering with the ionic catalyst complexes formed with the transition metal compounds, R, M, and ArNHal are defined as above, and n* is 0, 1, 2, or 3. Suitable cations for salts of the noncoordinating anions of the invention cocatalysts include those known in the art. Such include nitrogen-containing cations, such as those in the anilinium and ammonium salts of U. S. Patent No. 5,198,401, and WO 97/35893; the carbenium, oxonium, or sulfonium cations of U.S. Patent No. 5,387,568; metal cations, e.g., Ag ⁺; the silylium cations of WO 96/08519; and the cations of the hydrated salts of Group 1 or 2 metals of WO 97/22635. The teachings of these references are referred to for information and are incorporated by reference herein.

In a preferred embodiment, the NCA comprising an anion represented by Formula I is represented by the formula:

[Z_{d}] ⁺[R_{n*}M(ArNHal)_{4-n*}]-

where Z is (L-H) or a reducible Lewis acid; L is a neutral Lewis base; H is hydrogen; (L-H) is a Bronsted acid; d is 1, 2, or 3, and R, M, and ArNHal are defined as above, and n* is 0, 1, 2, or 3.

The cation component, [Z_{d}]⁺ may include Bronsted acids such as protons or protonated Lewis bases or reducible Lewis acids capable of protonating or abstracting a moiety, such as an alkyl or aryl, from the bulky ligand metallocene containing transition metal catalyst precursor, resulting in a cationic transition metal species.

The activating cation [Z_{d}]⁺ may also be a moiety such as silver, tropylium, carboniums, ferroceniums and mixtures, preferably carboniums and ferroceniums. Preferably [Z_{d}]⁺ is triphenyl carbonium. Preferred reducible Lewis acids can be any triaryl carbonium (where the aryl can be substituted or unsubstituted, such as those represented by the formula: [(Ar₃C)_{d}]⁺, where Ar is aryl or aryl substituted with a heteroatom, a C₁ to C₄₀ hydrocarbyl, or a substituted C1 to C40 hydrocarbyl), preferably [Z_{d}]⁺ is represented by the formula [(Ph₃C)_{d}]⁺, where Ph is a substituted or unsubstituted phenyl, preferably substituted with C₁ to C₄₀ hydrocarbyls or substituted a C₁ to C₄₀ hydrocarbyls, preferably C₁ to C₂₀ alkyls or aromatics or substituted C1 to C20 alkyls or aromatics, preferably Z is a triphenylcarbonium.

When [Z_{d}]⁺ is the activating cation [(L-H)_{d}]⁺, it is preferably a Bronsted acid, capable of donating a proton to the transition metal catalytic precursor resulting in a transition metal cation, including ammoniums, oxoniums, phosphoniums, silyliums, and mixtures thereof, preferably ammoniums of methylamine, aniline, dimethylamine, diethylamine, N-methylaniline, diphenylamine, trimethylamine, triethylamine, N,N-dimethylaniline, methyldiphenylamine, pyridine, p-bromo N,N-dimethylaniline, p-nitro-N,N-dimethylaniline, phosphoniums from triethylphosphine, triphenylphosphine, and diphenylphosphine, oxomiuns from ethers such as dimethyl ether diethyl ether, tetrahydrofuran and dioxane, sulfoniums from thioethers, such as diethyl thioethers, tetrahydrothiophene, and mixtures thereof.

In a preferred embodiment, the NCA that does not comprise an anion represented by Formula (I) is represented by the formula:

Z_{d}⁺ (A^{d-})

where, Z is (L-H) or a reducible Lewis acid, L is an neutral Lewis base; H is hydrogen; (L-H) is a Bronsted acid; A^{d-} is a boron containing non-coordinating anion having the charge d-d is 1, 2, or 3; where in the first NCA activator Z is a Bronsted acid and in the second NCA activator Z is a reducible Lewis acid, and Z, A and d are as further described above.

### Optional Co-Activators and Scavengers

In addition to these activator compounds, scavengers or co-activators may be used. Aluminum alkyl or organoaluminum compounds which may be utilized as co-activators (or scavengers) include, for example, trimethylaluminum, triethylaluminum, triisobutylaluminum, tri-n-hexylaluminum, and tri-n-octylaluminum.

### Optional Support Materials

In embodiments herein, the catalyst system may comprise an inert support material. Preferably the supported material is a porous support material, for example, talc, and inorganic oxides. Other support materials include zeolites, clays, organoclays, or any other organic or inorganic support material, and the like, or mixtures thereof.

Preferably, the support material is an inorganic oxide in a finely divided form. Suitable inorganic oxide materials for use in metallocene catalyst systems herein include Groups 2, 4, 13, and 14 metal oxides, such as silica, alumina, and mixtures thereof. Other inorganic oxides that may be employed either alone or in combination with the silica, or alumina are magnesia, titania, zirconia, and the like. Other suitable support materials, however, can be employed, for example, finely divided functionalized polyolefins, such as finely divided polyethylene. Particularly useful supports include magnesia, titania, zirconia, montmorillonite, phyllosilicate, zeolites, talc, and clays. Also, combinations of these support materials may be used, for example, silica-chromium, silica-alumina, and silica-titania. Preferred support materials include Al₂O₃, ZrO₂, SiO₂, and combinations thereof, more preferably SiO₂, Al₂O₃, or SiO₂/Al₂O₃.

It is preferred that the support material, most preferably an inorganic oxide, has a surface area in the range of from 10 to 700 m²/g, pore volume in the range of from 0.1 to 1.0 cc/g and average particle size in the range of from 5 to 500 µm. More preferably, the surface area of the support material is in the range of from 50 to 500 m²/g, pore volume of from 0.5 to 3.5 cc/g and average particle size of from 10 to 200 µm. Most preferably the surface area of the support material is in the range is from 100 to 400 m²/g, pore volume from 0.8 to 3.0 cc/g and average particle size is from 5 to 100 µm. The average pore size of the support material useful in the invention is in the range of from 10 to 1000 A, preferably 50 to 500 Å, and most preferably 75 to 350 Å. In some embodiments, the support material is a high surface area, amorphous silica (surface area=300 m²/gm; pore volume of 1.65 cm³/gm). Useful silicas are marketed under the tradenames of DAVISON 952 or DAVISON 955 by the Davison Chemical Division of W.R. Grace and Company. In other embodiments, DAVISON 948 is used.

The support material should be dry, that is, free of absorbed water. Drying of the support material can be effected by heating or calcining at 100°C to 1000°C, preferably at least 600°C. When the support material is silica, it is heated to at least 200°C, preferably 200°C to 850°C, and most preferably at 600°C; and for a time of minute to 100 hours, from 12 hours to 72 hours, or from 24 hours to 60 hours. The calcined support material must have at least some reactive hydroxyl (OH) groups to produce supported catalyst systems of this invention. The calcined support material is then contacted with at least one polymerization catalyst comprising at least one metallocene compound and an activator.

### Methods of Masking the Supported Catalyst Systems

The support material, having reactive surface groups, typically hydroxyl groups, is slurried in a non-polar solvent and the resulting slurry is contacted with a solution of a metallocene compound and the activator(s). In some embodiments, the slurry of the support material is first contacted with the activator(s) for a period of time in the range of from 0.5 hours to 24 hours, from 2 hours to 16 hours, or from 4 hours to 8 hours. The solution of the metallocene compound is then contacted with the isolated support/activator(s). In some embodiments, the supported catalyst system is generated in situ.

The mixture of the metallocene, activator(s) and support is heated to 0°C to 70°C, preferably to 23°C to 60°C, preferably at room temperature. Contact times typically range from 0.5 hours to 24 hours, from 2 hours to 16 hours, or from 4 hours to 8 hours.

Suitable non-polar solvents are materials in which all of the reactants used herein, i.e., the activator, and the metallocene compound, are at least partially soluble and which are liquid at reaction temperatures. Preferred non-polar solvents are alkanes, such as isopentane, hexane, n-heptane, octane, nonane, and decane, although a variety of other materials including cycloalkanes, such as cyclohexane, aromatics, such as benzene, toluene, and ethylbenzene, may also be employed.

In embodiments herein, the support material is contacted with a solution of a metallocene compound and activator(s), such that the reactive groups on the support material are titrated, to form a supported polymerization catalyst. The period of time for contact between the metallocene compound, the activator(s), and the support material is as long as is necessary to titrate the reactive groups on the support material. To "titrate" is meant to react with available reactive groups on the surface of the support material, thereby reducing the surface hydroxyl groups by at least 80%, at least 90%, at least 95%, or at least 98%. The surface reactive group concentration may be determined based on the calcining temperature and the type of support material used. The support material calcining temperature affects the number of surface reactive groups on the support material available to react with the metallocene compound and the activator(s): the higher the drying temperature, the lower the number of sites. For example, where the support material is silica which, prior to the use thereof in the first catalyst system synthesis step, is dehydrated by fluidizing it with nitrogen and heating at 600°C for 16 hours, a surface hydroxyl group concentration of 0.7 millimoles per gram (mmols/gm) is typically achieved. Thus, the exact molar ratio of the activator(s) to the surface reactive groups on the carrier will vary. Preferably, this is determined on a case-by-case basis to assure that only so much of the activator(s) are added to the solution as will be deposited onto the support material without leaving excess of the activators in the solution.

The amount of the catalyst system or catalyst component which will be deposited onto the support material without leaving excess in the solution can be determined in any conventional manner, e.g., by adding the activator(s) to the slurry of the carrier in the solvent, while stirring the slurry, until the activator(s) are detected as a solution in the solvent by any technique known in the art, such as by ¹H NMR. For example, for the silica support material heated at about 600°C, the amount of the activators added to the slurry is such that the molar ratio of boron to the hydroxyl groups (OH) on the silica is 0.5:1 to 4:1, preferably 0.8:1 to 3:1, more preferably 0.9:1 to 2:1 and most preferably 1:1. The amount of boron on the silica may be determined by using ICPES (Inductively Coupled Plasma Emission Spectrometry), which is described in J. W. Olesik, "Inductively Coupled Plasma-Optical Emission Spectroscopy," in the Encyclopedia of Materials Characterization, C. R. Brundle, C. A. Evans, Jr. and S. Wilson, Eds., Butterworth-Heinemann, Boston, Mass., 1992, pp. 633-644. In another embodiment, it is also possible to add such an amount of activators which is in excess of that which will be deposited onto the support, and then remove, e.g., by filtration and washing, any excess of the activators.

In any of the above embodiments the catalyst compound(s) may be added to the support before, at the same time as, or after the activator(s); the activator(s) may be added to the support before, at the same time as, or after the catalyst compound(s); or the activator(s) and catalyst compound(s) may be alternated, grouped, or staggered, for example the first activator, the catalyst compound then the second activator, or the first activator and catalyst compound, then second activator.

### Polymerization Processes

In embodiments herein, the invention relates to a process for polymerizing olefins, wherein the process comprises: contacting olefin monomer and optional comonomer(s) with a catalyst system comprising at least two activators and at least one transition metal compound (preferably a metallocene compound), where the transition metal compound is any of the compounds described above and preferably wherein polymer having at least two fractions that are different is obtained.

In a preferred embodiment, monomers and optional comonomers are selected from linear, branched or cyclic C₂ to C₄₀ olefins, preferably C₂ to C₂₀ olefins, preferably C₂ to C₁₂ olefins, preferably alpha olefins. In a preferred embodiment, the monomer is ethylene and the optional comonomer is one or more of C₃ to C₄₀ olefins, preferably C₃ to C₂₀ olefins, or preferably C₃ to C₁₂ olefins. In a preferred embodiment, the monomer is propylene and the optional comonomer(s) is one or more of ethylene and C₄ to C₄₀ olefins, preferably C₄ to C₂₀ olefins, or preferably C₃ to C₁₂ olefins. The comonomer(s) may be linear, branched, or cyclic. The cyclic monomer may be strained or unstrained, monocyclic or polycyclic, and may optionally include heteroatoms and/or one or more functional groups. Exemplary comonomers include ethylene, propylene, butene, pentene, hexene, heptene, octene, nonene, decene, undecene, dodecene, norbornene, norbornadiene, dicyclopentadiene, cyclopentene, cycloheptene, cyclooctene, cyclooctadiene, cyclododecene, 7-oxanorbornene, 7-oxanorbornadiene, substituted derivatives thereof, and isomers thereof, preferably hexene, heptene, octene, nonene, decene, dodecene, cyclooctene, 1,5-cyclooctadiene, 1-hydroxy-4-cyclooctene, 1-acetoxy-4-cyclooctene, 5-methylcyclopentene, cyclopentene, dicyclopentadiene, norbornene, norbornadiene, and their respective homologs and derivatives, preferably norbornene, norbornadiene, and dicyclopentadiene. Preferred monomers include ethylene propylene, butene, hexene, octene, decent, and dodecene.

In some embodiments, where butene is the comonomer, the butene source may be a mixed butene stream comprising various isomers of butene. The 1-butene monomers are expected to be preferentially consumed by the polymerization process. Use of such mixed butene streams will provide an economic benefit, as these mixed streams are often waste streams from refining processes, for example, C₄ raffinate streams, and can therefore be substantially less expensive than pure 1-butene.

Processes of this invention can be carried out in any manner known in the art. Any suspension, homogeneous, bulk, solution, slurry, or gas phase polymerization process known in the art can be used. Such processes can be run in a batch, semi-batch, or continuous mode. Homogeneous polymerization processes and slurry processes are preferred. (A homogeneous polymerization process is defined to be a process where at least 90 wt% of the product is soluble in the reaction media.) A bulk homogeneous process is particularly preferred. (A bulk process is defined to be a process where monomer concentration in all feeds to the reactor is 70 volume % or more.) Alternately, no solvent or diluent is present or added in the reaction medium, (except for the small amounts used as the carrier for the catalyst system or other additives, or amounts typically found with the monomer; e.g., propane in propylene). In another embodiment, the process is a slurry process. As used herein the term "slurry polymerization process" means a polymerization process where a supported catalyst is employed and monomers are polymerized on the supported catalyst particles. At least 95 wt% of polymer products derived from the supported catalyst are in granular form as solid particles (not dissolved in the diluent).

Suitable diluents/solvents for polymerization include non-coordinating, inert liquids. Examples include straight and branched-chain hydrocarbons, such as isobutane, butane, pentane, isopentane, hexanes, isohexane, heptane, octane, dodecane, and mixtures thereof; cyclic and alicyclic hydrocarbons, such as cyclohexane, cycloheptane, methylcyclohexane, methylcycloheptane, and mixtures thereof, such as can be found commercially (Isopar™); and perhalogenated hydrocarbons, such as perfluorinated C₄₋₁₀ alkanes, chlorobenzene, and aromatic and alkylsubstituted aromatic compounds, such as benzene, toluene, mesitylene, and xylene. Suitable solvents also include liquid olefins which may act as monomers or comonomers including ethylene, propylene, 1-butene, 1-hexene, 1-pentene, 3-methyl-1-pentene, 4-methyl-1-pentene, 1-octene, 1-decene, and mixtures thereof. In a preferred embodiment, aliphatic hydrocarbon solvents are used as the solvent, such as isobutane, butane, pentane, isopentane, hexanes, isohexane, heptane, octane, dodecane, and mixtures thereof; and cyclic and alicyclic hydrocarbons, such as cyclohexane, cycloheptane, methylcyclohexane, methylcycloheptane, and mixtures thereof. In another embodiment, the solvent is not aromatic, preferably aromatics are present in the solvent at less than 1 wt%, preferably less than 0.5 wt%, preferably less than 0 wt% based upon the weight of the solvents.

Additives may also be used in the processes described herein, such as one or more scavengers, promoters, modifiers, chain transfer agents, reducing agents, oxidizing agents, hydrogen, aluminum alkyls, or silanes.

Preferred polymerizations can be run at any temperature and/or pressure suitable to obtain the desired polymers. Typical temperatures and/or pressures include a temperature in the range of from 0°C to 300°C, preferably 20°C to 200°C, preferably 35°C to 150°C, preferably from 40°C to 120°C, preferably from 45°C to 80°C; and at a pressure in the range of from 0.35 MPa to 10 MPa, preferably from 0.45 MPa to 6 MPa, or preferably from 0.5 MPa to 4 MPa.

In a typical polymerization, the run time of the reaction is up to 300 minutes, preferably in the range of from 5 to 250 minutes, or preferably from 10 to 120 minutes.

In a some embodiments, hydrogen is present in the polymerization reactor at a partial pressure of 0.001 to 50 psig (0.007 to 345 kPa), preferably from 0.01 to 25 psig (0.07 to 172 kPa), more preferably 0.1 to 10 psig (0.7 to 70 kPa).

In an alternate embodiment, the activity of the catalyst is at least 50 g/mmol/hour, preferably 500 or more g/mmol/hour, preferably 5000 or more g/mmol/hr, preferably 50,000 or more g/mmol/hr. In an alternate embodiment, the conversion of olefin monomer is at least 10%, based upon polymer yield and the weight of the monomer entering the reaction zone, preferably 20% or more, preferably 30% or more, preferably 50% or more, preferably 80% or more.

In a preferred embodiment, little or no alumoxane is used in the process to produce the polymers. Preferably, alumoxane is present at zero mol%, alternately the alumoxane is present at a molar ratio of aluminum to transition metal less than 500:1, preferably less than 300:1, preferably less than 100:1, preferably less than 1:1.

In addition to these activator compounds, scavengers or co-activators may be used. Aluminum alkyl or organoaluminum compounds which may be utilized as co-activators (or scavengers) include, for example, trimethylaluminum, triethylaluminum, triisobutylaluminum, tri-n-hexylaluminum, and tri-n-octylaluminum.

In a preferred embodiment, little or no scavenger is used in the process to produce the polymer. Preferably, scavenger (such as tri alkyl aluminum) is present at zero mol%, alternately the scavenger is present at a molar ratio of scavenger metal to transition metal of less than 100:1, preferably less than 50:1, preferably less than 15:1, preferably less than 10:1.

In a preferred embodiment, the polymerization: 1) is conducted at temperatures of 0 to 300°C (preferably 25 to 150°C, preferably 40 to 120°C, preferably 45 to 80°C); 2) is conducted at a pressure of atmospheric pressure to 10 MPa (preferably 0.35 to 10 MPa, preferably from 0.45 to 6 MPa, preferably from 0.5 to 4 MPa); 3) is conducted in an aliphatic hydrocarbon solvent (such as isobutane, butane, pentane, isopentane, hexanes, isohexane, heptane, octane, dodecane, and mixtures thereof; cyclic and alicyclic hydrocarbons, such as cyclohexane, cycloheptane, methylcyclohexane, methylcycloheptane, and mixtures thereof, preferably where aromatics are present in the solvent at less than 1 wt%, preferably less than 0.5 wt%, preferably at 0 wt% based upon the weight of the solvents); 4) wherein the catalyst system used in the polymerization comprises at least two NCA activators (as described herein) and preferably contains less than 0.5 mol%, preferably 0 mol% alumoxane, alternately the alumoxane is present at a molar ratio of aluminum to transition metal less than 500:1, preferably less than 300:1, preferably less than 100:1, preferably less than 1:1); 5) the polymerization occurs in one reaction zone; 6) the productivity of the catalyst compound is at least 80,000 g/mmol/hr (preferably at least 150,000 g/mmol/hr, preferably at least 200,000 g/mmol/hr, preferably at least 250,000 g/mmol/hr, preferably at least 300,000 g/mmol/hr); 7) optionally scavengers (such as trialkyl aluminum compounds) are absent (e.g., present at zero mol%, alternately the scavenger is present at a molar ratio of scavenger metal to transition metal of less than 100:1, preferably less than 50:1, preferably less than 15:1, preferably less than 10:1); and 8) optionally hydrogen is present in the polymerization reactor at a partial pressure of 0.001 to 50 psig (0.007 to 345 kPa) (preferably from 0.01 to 25 psig (0.07 to 172 kPa), more preferably 0.1 to 10 psig (0.7 to 70 kPa)). In a preferred embodiment, the catalyst system used in the polymerization comprises no more than one catalyst compound. A "reaction zone" also referred to as a "polymerization zone" is a vessel where polymerization takes place, for example a batch reactor. When multiple reactors are used in either series or parallel configuration, each reactor is considered as a separate polymerization zone. For a multi-stage polymerization in both a batch reactor and a continuous reactor, each polymerization stage is considered as a separate polymerization zone. In a preferred embodiment, the polymerization occurs in one reaction zone.

### Examples

All molecular weights are weight average reported in g/mol unless otherwise noted. Room temperature is 23°C unless otherwise noted.

### General Procedures for High Through-put Scale Experiments

Ethylene/1-octene copolymerizations were carried out in a parallel, pressure reactor, as generally described in U.S. Patent Nos. 6,306,658; 6,455,316; 6,489,168; WO 00/09255; and Murphy et al., J. Am. Chem. Soc., 2003, 125, pp. 4306-4317. Although the specific quantities, temperatures, solvents, reactants, reactant ratios, pressures, and other variables may change from one polymerization run to the next, the following describes a typical polymerization performed in a parallel, pressure reactor.

A pre-weighed glass vial insert and disposable stirring paddle were fitted to each reaction vessel of the reactor, which contains 48 individual reaction vessels. The reactor was then closed and each vessel was individually heated to a set temperature (usually between 50 and 110°C) and pressurized to a predetermined pressure of 1.38 MPa (usually between 75 and 400 psi) ethylene. If desired, 1-octene (100 microliters, 637 micromol) was injected into each reaction vessel through a valve, followed by enough solvent (typically toluene or isohexane) to bring the total reaction volume, including the subsequent additions, to 5 mL. Tri-n-octylaluminum in toluene (100 microliters, 10 mM in toluene, 1 micromol) was then added to act as a co-catalyst/scavenger, if used. The contents of the vessel were then stirred at 800 rpm. A toluene solution of catalyst (typically 0.40 mM in toluene, usually 20-40 nanomols of catalyst) along with 500 microliters of isohexane was then injected into the reaction vessel. A toluene solution of the activators (usually 1.0 molar equivalents dissolved in toluene) along with 500 microliters of isohexane was then injected into the reaction vessel. Equivalence is determined based on the molar equivalents relative to the moles of the transition metal in the catalyst complex.

The reaction was then allowed to proceed until a pre-determined amount of ethylene (10 to 20 psi, 69 to 138 kPa) had been taken up by the reaction (ethylene pressure was maintained in each reaction vessel at the pre-set level by computer control). At this point, the reaction was quenched by pressurizing the vessel with compressed air. After the polymerization reaction, the glass vial insert containing the polymer product and solvent was removed from the pressure cell and the inert atmosphere glove box, and the volatile components were removed using a Genevac HT-12 centrifuge and Genevac VC3000D vacuum evaporator operating at elevated temperature and reduced pressure. The vial was then weighed to determine the yield of the polymer product. The resultant polymer was analyzed by Rapid GPC (see below) to determine the molecular weight, by FT-IR (see below) to determine comonomer incorporation, and by DSC (see below) to determine melting point (Tm).

To determine various molecular weight related values by GPC, high temperature size exclusion chromatography was performed using an automated "Rapid GPC" system as generally described in U.S. Patent Nos. 6,491,816; 6,491,823; 6,475,391; 6,461,515; 6,436,292; 6,406,632; 6,175,409; 6,454,947; 6,260,407; and 6,294,388. This apparatus has a series of three 30 cm x 7.5 mm linear columns, each containing PLgel 10 um, Mix B. The GPC system was calibrated using polystyrene standards ranging from 580 - 3,390,000 g/mol. The system was operated at an eluent flow rate of 2.0 mL/minutes and an oven temperature of 165°C. 1,2,4-trichlorobenzene was used as the eluent. The polymer samples were dissolved in 1,2,4-trichlorobenzene at a concentration of 0.1 - 0.9 mg/mL. 250 uL of a polymer solution was injected into the system. The concentration of the polymer in the eluent was monitored using an evaporative light scattering detector. The molecular weights presented are relative to linear polystyrene standards and are uncorrected.

Differential Scanning Calorimetry (DSC) measurements were performed on a TA-Q100 instrument to determine the melting point of the polymers. Samples were pre-annealed at 220°C for 15 minutes and then allowed to cool to room temperature overnight. The samples were then heated to 220°C at a rate of 100°C/minutes and then cooled at a rate of 50°C/min. Melting points were collected during the heating period.

The ratio of 1-octene to ethylene incorporated in the polymers (weight %) was determined by rapid FT-IR spectroscopy on a Bruker Equinox 55+ IR in reflection mode. Samples were prepared in a thin film format by evaporative deposition techniques. Weight percent 1-octene was obtained from the ratio of peak heights at 1378 and 4322 cm-1. This method was calibrated using a set of ethylene/1-octene copolymers with a range of known wt% 1-octene content.

### Examples

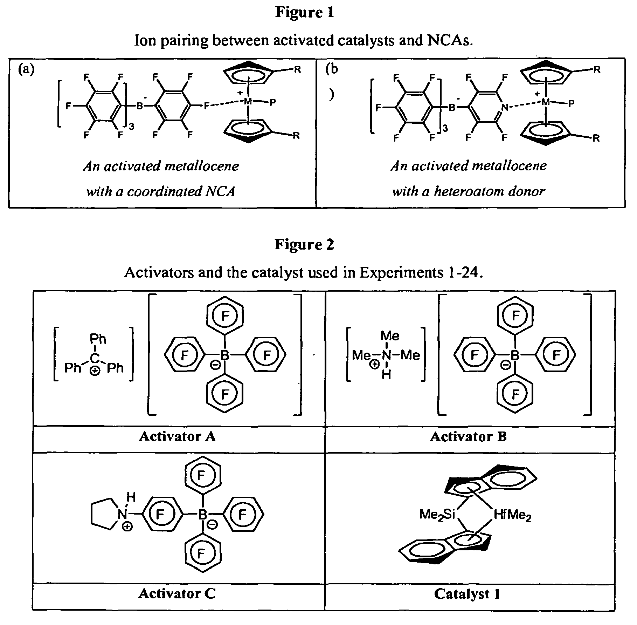

The follow experiments were carried out following the general procedure above using 0.03 µmol of a single catalyst (Cat-1, *rac*-dimethylsilyl bisindenyl hafnium dimethyl) at a constant molar ratio of total activator to catalyst of 1:1. In the mixed activator experiments half a molar equivalent relative to catalyst of each activator was used, maintaining the 1:1 catalyst:activator ratio. The polymerization temperature was 80°C, the ethylene pressure was 150 psi (1034 kPa) and 0.1 ml of octene was used. The data are reported in Tables 1 and 2. The activators used were [Ph₃C⁺][B(C₆F₅)₄⁻] (Activator A); [Me₃NH⁺][B(C₆F₅)₄⁻] (Activator B); and 1-(4-(tris(pentafluorophenyl)borate)-2,3,5,6-tetrafluorophenyl) pyrrolidinium (Activator C as shown in Figure 2, where Ph is phenyl, and Me is methyl).

**Table 1A Ethylene/Octene Polymerization with rac-dimethylsilyl-bis(indenyl)hafnium dimethyl**

| Exp. No | Activator A | Activator A (µmol) | Activator B | Activator B (µmol) | Quench time (s) | yield (g) | Octene wt% |
|---|---|---|---|---|---|---|---|
| 1 | **A** | 0.03 | -- | -- | 91.9 | 0.1930 | 25.1 |
| 2 | **A** | 0.03 | -- | -- | 103.2 | 0.1932 | 23.8 |
| 3 | **A** | 0.03 | -- | -- | 100.9 | 0.1974 | 24.0 |
| 4 | **A** | 0.03 | -- | -- | 73.1 | 0.1705 | 26.0 |
| 5 | **A** | 0.015 | **B** | 0.015 | 136.8 | 0.1827 | 27.4 |
| 6 | **A** | 0.015 | **B** | 0.015 | 58.5 | 0.1546 | 20.6 |
| 7 | **A** | 0.015 | **B** | 0.015 | 98.3 | 0.1724 | 28.1 |
| 8 | **A** | 0.015 | **B** | 0.015 | 63.2 | 0.1602 | 22.5 |
| 9 | **A** | 0.015 | **C** | 0.015 | 89.1 | 0.1824 | 26.8 |
| 10 | **A** | 0.015 | **C** | 0.015 | 42.1 | 0.1641 | 26.5 |
| 11 | **A** | 0.015 | **C** | 0.015 | 51.7 | 0.1720 | 26.9 |
| 12 | **A** | 0.015 | **C** | 0.015 | 41.9 | 0.1602 | 23.3 |
| 13 | **B** | 0.03 | -- | -- | 149.5 | 0.0562 | 15.2 |
| 14 | **B** | 0.03 | -- | -- | 140.1 | 0.0596 | 14.8 |
| 15 | **B** | 0.03 | -- | -- | 128.3 | 0.0685 | 15.4 |
| 16 | **B** | 0.03 | -- | -- | 151.0 | 0.0513 | 12.1 |
| 17 | **B** | 0.015 | **C** | 0.015 | 68.4 | 0.1136 | 18.4 |
| 18 | **B** | 0.015 | **C** | 0.015 | 93.1 | 0.0925 | 16.7 |
| 19 | **B** | 0.015 | **C** | 0.015 | 89.4 | 0.1125 | 18.4 |
| 20 | **B** | 0.015 | **C** | 0.015 | 84.1 | 0.0966 | 16.7 |
| 21 | **C** | 0.03 | -- | -- | 86.3 | 0.0754 | 16.1 |
| 22 | **C** | 0.03 | -- | -- | 124.9 | 0.0926 | 17.2 |
| 23 | **C** | 0.03 | -- | -- | 113.7 | 0.0879 | 15.8 |
| 24 | **C** | 0.03 | -- | -- | 131.8 | 0.0851 | 15.0 |

**Table 1B Ethylene/Octene Polymerization with rac-dimethylsilyl-bis(indenyl)hafnium dimethyl**

| Exp. No | Average Mw | Average Mn | Average Mw/Mn | Tm (°C) |
|---|---|---|---|---|
| 1 | 671030 | 239186 | 2.8 | 89.8 |
| 2 | 641057 | 232048 | 2.8 | 89.7 |
| 3 | 625092 | 199517 | 3.1 | 88.7 |
| 4 | 733432 | 301319 | 2.4 | 107.2 |
| 5 | 545361 | 138059 | 4.0 | 90.9 |
| 6 | 622064 | 281981 | 2.2 | 89.2 |
| 7 | 365219 | 93868 | 3.9 | 88.1 |
| 8 | 563210 | 178501 | 3.2 | 91.3 |
| 9 | 547166 | 158971 | 3.4 | 92.0 |
| 10 | 444560 | 124864 | 3.6 | 90.4 |
| 11 | 483977 | 131254 | 3.7 | 89.1 |
| 12 | 517114 | 148672 | 3.5 | 94.1 |
| 13 | 1007598 | 676467 | 1.5 | 95.3 |
| 14 | 1000738 | 669130 | 1.5 | 93.8 |
| 15 | 957442 | 639185 | 1.5 | 93.1 |
| 16 | 1092771 | 740155 | 1.5 | 99.4 |
| 17 | 740150 | 462343 | 1.6 | 88.5 |
| 18 | 833351 | 544619 | 1.5 | 90.1 |
| 19 | 750623 | 476553 | 1.6 | 87.3 |
| 20 | 822801 | 530594 | 1.6 | 91.3 |
| 21 | 768082 | 503227 | 1.5 | 91.8 |
| 22 | 711931 | 461262 | 1.5 | 91.3 |
| 23 | 746823 | 485490 | 1.5 | 92.5 |
| 24 | 761258 | 494022 | 1.5 | 95.3 |

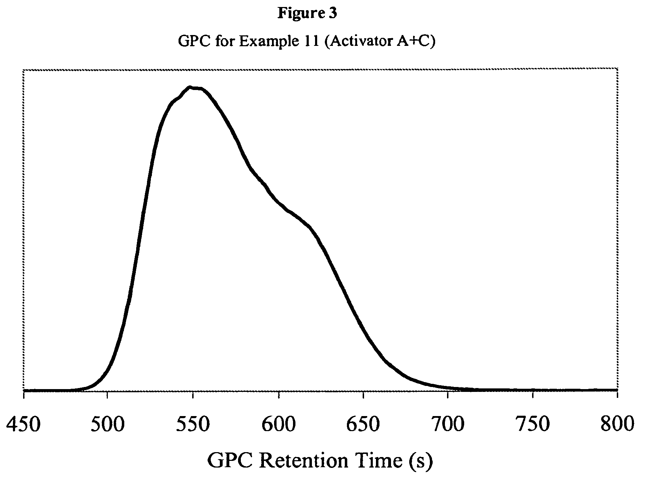

GPC analysis of the polymers from experiments using multiple activators shows bimodal distributions or increased PDI (Mw/Mn). The GPC trace of Experiment 11 is shown in Figure 3.

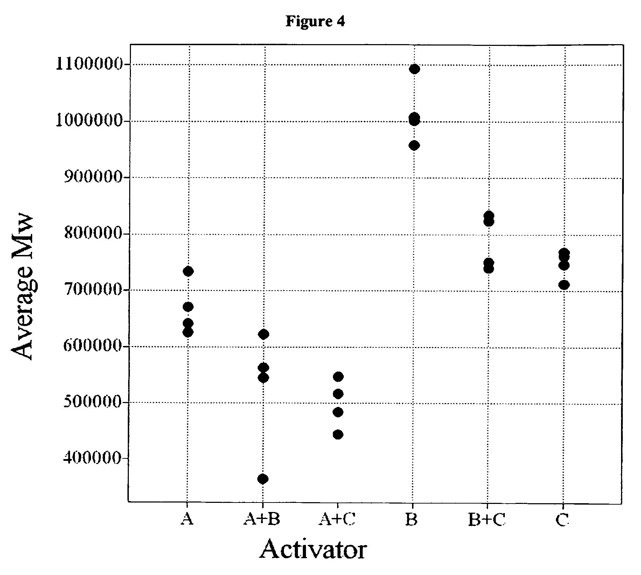

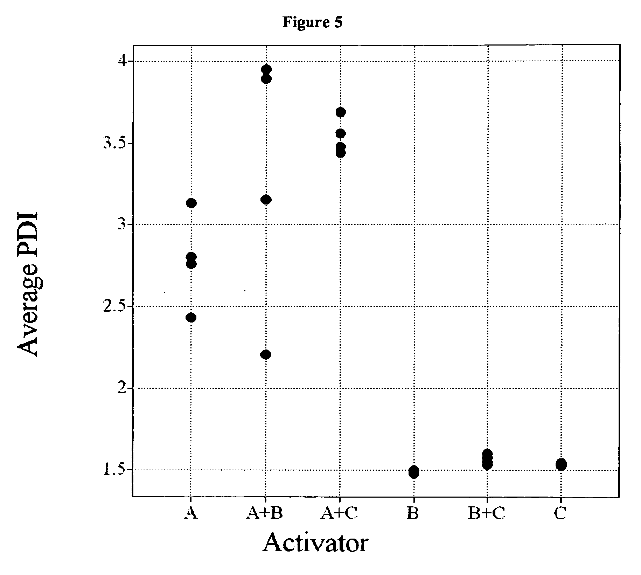

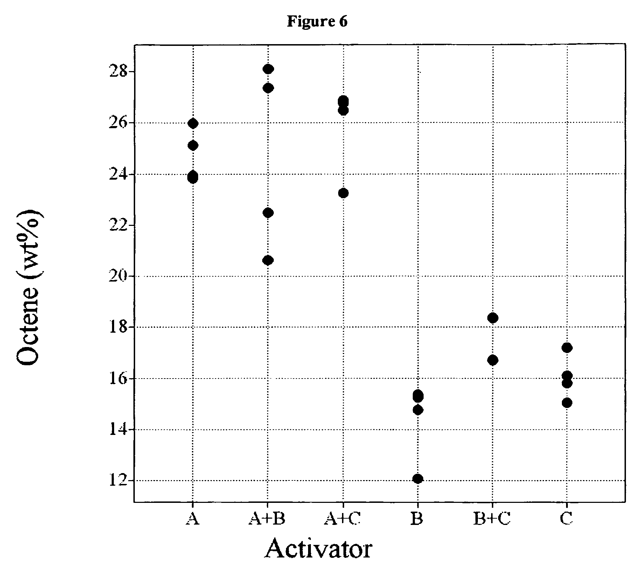

The Mw (Figure 4), PDI (Mw/Mn)) (Figure 5), and comonomer incorporation (Figure 6) data arc shown graphically in Figures 4, 5, and 6. The effect of multiple activators on a single catalyst is not simply an averaging of the polymer formed when using either of the activators alone.

## Claims

1. A catalyst system comprising a transition metal catalyst compound and at least two boron containing non-coordinating anion "NCA" activators represented by the formula:
Z_{d}⁺ (A^{d-}),
where, Z is (L-H) or a reducible Lewis acid, L is a neutral Lewis base; H is hydrogen; (L-H) is a Bronsted acid; A^{d-} is a boron containing non-coordinating anion having the charge d-; d is 1, 2, or 3; wherein, in the first NCA activator, Z is a Bronsted acid and in the second NCA activator, Z is a reducible Lewis acid.

2. The catalyst system of claim 1, wherein the reducible Lewis acid is represented by the formula: (Ar₃C⁺), where Ar is aryl or aryl substituted with a heteroatom, a C₁ to C₄₀ hydrocarbyl or a substituted C₁ to C₄₀ hydrocarbyl, preferably the reducible Lewis acid is represented by the formula: (Ph₃C⁺), where Ph is phenyl or phenyl substituted with a heteroatom, a C₁ to C₄₀ hydrocarbyl or a substituted C₁ to C₄₀ hydrocarbyl.

3. The catalyst system of claim 1 or 2, wherein the second NCA activator Z_{d}⁺ is triphenylcarbonium.

4. The catalyst system of claim 1, 2, or 3, wherein the first NCA activator Z_{d}⁺ is represented by the formula:
(L-H)_{d}⁺,
wherein L is an neutral Lewis base; H is hydrogen; (L-H) is a Bronsted acid; and d is 1, 2 or 3, preferably (L-H)_{d}⁺ is a Bronsted acid selected from ammoniums, oxoniums, phosphoniums, silyliums, and mixtures thereof

5. The catalyst system of claim 1, 2, 3, or 4, wherein the anion component A^{d-} is represented by the formula:
[M^{k+}Qₙ]^{d-},
wherein k is 1, 2, or 3; n is 1, 2, 3, 4, 5, or 6 (preferably 1, 2, 3, or 4); n - k = d; M is boron, and Q is independently selected from hydride, bridged or unbridged dialkylamido, halide, alkoxide, aryloxide, hydrocarbyl, substituted hydrocarbyl, halocarbyl, substituted halocarbyl, and halosubstituted-hydrocarbyl radicals, said Q having up to 20 carbon atoms with the proviso that in not more than 1 occurrence is Q a halide.

6. The catalyst system of claim 1, 2, 3, 4, or 5, wherein the two NCAs are [Ph₃C⁺][B(C₆F₅)₄⁻] and [Me₃NH⁺][B(C₆F₅)₄⁻]; where Ph is phenyl and Me is methyl.

7. A catalyst system comprising a transition metal catalyst compound and at least two non-coordinating anion "NCA" activators, where at least one NCA activator comprises an anion as described in Formula I and at least one NCA activator does not comprise an anion as described in Formula I, where Formula I is:
RₙM(ArNHal)₄₋ₙ (I)
where R is a monoanionic ligand; M is a Group 13 metal or metalloid; ArNHal is a halogenated, nitrogen-containing aromatic ring, polycyclic aromatic ring, or aromatic ring assembly in which two or more rings (or fused ring systems) are joined directly to one another or together; and n is 0, 1, 2, or 3.

8. The catalyst system of claim 7, wherein the NCA that does not comprise an anion represented by Formula I is represented by the following formula: Z_{d}⁺ (A^{d-}), where Z is (L-H) or a reducible Lewis acid; L is an neutral Lewis base; H is hydrogen; (L-H) is a Bronsted acid; A^{d-} is a boron containing non-coordinating anion having the charge d-; d is 1, 2, or 3; where, alternately, in the first NCA activator Z is a Bronsted acid and in the second NCA activator Z is a reducible Lewis acid.

9. The catalyst system of claim 8, wherein the reducible Lewis acid is represented by the formula: (Ar₃C⁺), where Ar is aryl or aryl substituted with a heteroatom; a C₁ to C₄₀ hydrocarbyl; or a substituted C₁ to C₄₀ hydrocarbyl; preferably the reducible Lewis acid is represented by the formula: (Ph₃C⁺), where Ph is phenyl or phenyl substituted with a heteroatom, a C₁ to C₄₀ hydrocarbyl, or a substituted C₁ to C₄₀ hydrocarbyl.

10. The catalyst system of any of claims 7 to 9, wherein at least one NCA activator is represented by the formula:
[Z_{d}]⁺ [RₙM(ArNHal)₄₋ₙ]⁻
where R is a monoanionic ligand; M is a Group 13 metal or metalloid; ArNHal is a halogenated, nitrogen-containing aromatic ring, polycyclic aromatic ring or aromatic ring assembly in which two or more rings (or fused ring systems) are joined directly to one another or together; n is 0, 1, 2, or 3; Z is (L-H) or a reducible Lewis acid; L is an neutral Lewis base; H is hydrogen; (L-H) is a Bronsted acid; and d is 1, 2, or 3; and wherein R is selected from the group consisting of substituted or unsubstituted C₁ to C₃₀ hydrocarbyl aliphatic or aromatic groups, where substituted means that at least one hydrogen on a carbon atom is replaced with a hydrocarbyl, halide, halocarbyl, hydrocarbyl or halocarbyl substituted organometalloid, dialkylamido, alkoxy, aryloxy, alkysulfido, arylsulfido, alkylphosphido, arylphosphide, or other anionic substituent; fluoride; bulky alkoxides, where bulky means C₄ to C₂₀ hydrocarbyl groups; --SR ¹; --NR ²₂, and --PR ³₂, where each R¹, R², or R³ is independently a substituted or unsubstituted hydrocarbyl as defined above; or a C₁ to C₃₀ hydrocarbyl substituted organometalloid.

11. A catalyst system comprising a transition metal catalyst compound and at least two non-coordinating anion "NCA" activators, where the two NCA activators comprise an anion as described in Formula I except that the N in the second NCA in the ArNHal is at a different position in the nitrogen containing aromatic ring than the N in the ArNHal of the first NCA, where Formula I is:
RₙM(ArNHal)₄₋ₙ (I)
where R is a monoanionic ligand; M is a Group 13 metal or metalloid; ArNHal is a halogenated, nitrogen-containing aromatic ring, polycyclic aromatic ring or aromatic ring assembly in which two or more rings (or fused ring systems) are joined directly to one another or together; and n is 0, 1, 2, or 3.

12. The catalyst system of claim 11, wherein M is B or A1 and/or ArNHal is one or more of tetrafluoropyridine, hexafluoroquinoline, or hexafluoroisoquinoline.

13. The catalyst system of any of claims 11 or 12, wherein the NCA activators are represented by the formula:
[Z_{d}]⁺ [RₙM(ArNHal)₄₋ₙ]⁻
where R is a monoanionic ligand; M is a Group 13 metal or metalloid; ArNHal is a halogenated, nitrogen-containing aromatic ring, polycyclic aromatic ring or aromatic ring assembly in which two or more rings (or fused ring systems) are joined directly to one another or together; n is 0, 1, 2, or 3; Z is (L-H) or a reducible Lewis acid; L is an neutral Lewis base; H is hydrogen; (L-H) is a Bronsted acid; and d is 1, 2, or 3.

14. The catalyst system of any of claims 11 to 13, wherein R is selected from the group consisting of substituted or unsubstituted C₁ to C₃₀ hydrocarbyl aliphatic or aromatic groups, where substituted means that at least one hydrogen on a carbon atom is replaced with a hydrocarbyl, halide, halocarbyl, hydrocarbyl or halocarbyl substituted organometalloid, dialkylamido, alkoxy, aryloxy, alkysulfido, arylsulfido, alkylphosphido, arylphosphide, or other anionic substituent; fluoride; bulky alkoxides, where bulky means C₄ to C₂₀ hydrocarbyl groups; --SR ¹; --NR ²₂, and --PR ³₂, where each R¹, R², or R³ is independently a substituted or unsubstituted hydrocarbyl as defined above; or a C₁ to C₃₀ hydrocarbyl substituted organometalloid.

15. A method to polymerize olefins comprising contacting olefins with the catalyst system of any of claims 1 to 14.

## Patentansprüche

1. Katalysatorsystem, das eine Übergangsmetallkatalysatorverbindung und mindestens zwei borhaltige nicht-koordinierende Anion-"NCA"-Aktivatoren umfasst, die durch die folgende Formel wiedergegeben werden:
Z_{d}⁺ (A^{d-}),
wobei Z (L-H) oder eine reduzierbare Lewis-Säure ist, L eine neutrale Lewis-Base ist; H Wasserstoff ist; (L-H) eine Brönstedt-Säure ist; A^{d-} borhaltiges nicht-koordinierendes Anion mit der Ladung d- ist; d 1, 2 oder 3 ist; wobei Z in dem ersten NCA-Aktivator eine Brönstedt-Säure ist und Z in dem zweiten NCA-Aktivator eine reduzierbare Lewis-Säure ist.

2. Katalysatorsystem nach Anspruch 1, bei dem die reduzierbare Lewis-Säure durch die folgende Formel wiedergegeben wird: (Ar₃C⁺), wobei Ar Aryl oder Aryl substituiert mit einem Heteroatom, einem C₁- bis C₄₀-Kohlenwasserstoff oder einem substituierten C₁- bis C₄₀-Kohlenwasserstoff ist, wobei die reduzierbare Lewis-Säure vorzugsweise wiedergegeben wird durch die Formel: (Ph₃C⁺), wobei Ph Phenyl oder Phenyl substituiert mit einem Heteroatom, einem C₁- bis C₄₀-Kohlenwasserstoff oder einem substituierten C₁- bis C₄₀-Kohlenwasserstoff ist.

3. Katalysatorsystem nach Anspruch 1 oder 2, bei dem der zweite NCA-Aktivator Z_{d}⁺ Triphenylcarbonium ist.

4. Katalysatorsystem nach Anspruch 1, 2 oder 3, bei dem der erste NCA-Aktivator Z_{d}⁺ durch die folgende Formel wiedergegeben wird:
(L-H)_{d}⁺,
wobei L eine neutrale Lewis-Base ist; H Wasserstoff ist; (L-H) eine Brönstedt-Säure ist; und d 1, 2 oder 3 ist, wobei (L-H)_{d}⁺ vorzugsweise eine Brönstedt-Säure ausgewählt aus Ammoniumionen, Oxoniumionen, Phosphoniumionen, Silyliumionen und Mischungen davon ist.

5. Katalysatorsystem nach Anspruch 1, 2, 3 oder 4, bei dem die Anionkomponente A^{d-} durch die folgende Formel wiedergegeben wird:
[M^{k+}Qₙ]^{d-},
wobei k 1, 2 oder 3 ist; n 1, 2, 3, 4, 5 oder 6 (vorzugsweise 1, 2, 3 oder 4) ist; n - k = d; M Bor ist, und Q unabhängig ausgewählt ist aus Hydrid-, verbrückten oder unverbrückten Dialkylamido-, Halogenid-, Alkoxid-, Aryloxid-, Kohlenwasserstoff-, substituierten Kohlenwasserstoff-, Halogenkohlenstoff-, substituierten Halogenkohlenstoff- und halogensubstituierten Kohlenwasserstoffresten, wobei Q bis zu 20 Kohlenstoffatome aufweist, mit der Maßgabe, dass in nicht mehr als einem Vorkommen Q ein Halogenid ist.

6. Katalysatorsystem nach Anspruch 1, 2, 3, 4 oder 5, bei dem die beiden NCAs [Ph₃C⁺] [B(C₆F₅)₄⁻] und [Me₃NH⁺] [B(C₆F₅)₄⁻] sind; wobei Ph Phenyl ist und Me Methyl ist.

7. Katalysatorsystem, das eine Übergangsmetallkatalysatorverbindung und mindestens zwei nichtkoordinierende Anion- "NCA"-Aktivatoren umfasst, wobei mindestens ein NCA-Aktivator ein Anion wie in Formel I beschrieben umfasst und mindestens ein NCA-Aktivator nicht ein Anion wie in Formel I beschrieben umfasst, wobei Formel I
RₙM(ArNHal)₄₋ₙ (I)
ist, wobei R ein monoanionischer Ligand ist; M ein Metall oder Metalloid der Gruppe 13 ist; ArNHal ein halogenierter stickstoffhaltiger aromatischer Ring, polycyclischer aromatischer Ring oder eine halogenierte stickstoffhaltige aromatische Ringstruktur ist, in der zwei oder mehr Ringe (oder kondensierte Ringsysteme) direkt aneinander oder miteinander verbunden sind; und n 0, 1, 2 oder 3 ist.

8. Katalysatorsystem nach Anspruch 7, bei dem das NCA, das kein Anion umfasst, das durch Formel I wiedergegeben wird, durch die folgende Formel wiedergegeben wird: Z_{d}⁺(A^{d-}), wobei Z (L-H) oder eine reduzierbare Lewis-Säure ist; L eine neutrale Lewis-Base ist; H Wasserstoff ist; (L-H) eine Brönstedt-Säure ist; A^{d-} borhaltiges nicht-koordinierendes Anion mit der Ladung d- ist; d 1, 2 oder 3 ist; wobei alternierend Z in dem ersten NCA-Aktivator eine Brönstedt-Säure ist und Z in dem zweiten NCA-Aktivator eine reduzierbare Lewis-Säure ist.

9. Katalysatorsystem nach Anspruch 8, bei dem die reduzierbare Lewis-Säure durch die folgende Formel wiedergegeben wird: (Ar₃C⁺), wobei Ar Aryl oder Aryl substituiert mit einem Heteroatom, einem C₁- bis C₄₀-Kohlenwasserstoff oder einem substituierten C₁- bis C₄₀-Kohlenwasserstoff ist; wobei die reduzierbare Lewis-Säure vorzugsweise wiedergegeben wird durch die Formel: (Ph₃C⁺), wobei Ph Phenyl oder Phenyl substituiert mit einem Heteroatom, einem C₁- bis C₄₀-Kohlenwasserstoff oder einem substituierten C₁- bis C₄₀-Kohlenwasserstoff ist.

10. Katalysatorsystem nach einem der Ansprüche 7 bis 9, bei dem mindestens ein NCA-Aktivator durch die folgende Formel wiedergegeben wird:
[Z_{d}]⁺ [RₙM(ArNHal)₄₋ₙ]⁻
wobei R ein monoanionischer Ligand ist; M ein Metall oder Metalloid der Gruppe 13 ist; ArNHal ein halogenierter stickstoffhaltiger aromatischer Ring, polycyclischer aromatischer Ring oder eine halogenierte stickstoffhaltige aromatische Ringstruktur ist, in der zwei oder mehr Ringe (oder kondensierte Ringsysteme) direkt aneinander oder miteinander verbunden sind; n 0, 1, 2 oder 3 ist; Z (L-H) oder eine reduzierbare Lewis-Säure ist; L eine neutrale Lewis-Base ist; H Wasserstoff ist; (L-H) eine Brönstedt-Säure ist; und d 1, 2 oder 3 ist; und wobei R ausgewählt ist aus der Gruppe bestehend aus substituierten oder unsubstituierten aliphatischen oder aromatischen C₁- bis C₃₀-Kohlenwasserstoffgruppen, wobei substituiert bedeutet, dass mindestens ein Wasserstoff an einem Kohlenstoffatom durch einen Kohlenwasserstoff-, Halogenid-, Halogenkohlenstoff-, kohlenwasserstoff- oder halogenkohlenstoffsubstituierten Organometalloid-, Dialkylamido-, Alkoxy-, Aryloxy-, Alkylsulfido-, Arylsulfido-, Alkylphosphido-, Arylphosphid- oder anderen anionischen Substituenten; Fluorid; raumerfüllende Alkoxide, wobei raumerfüllend C₄-bis C₂₀-Kohlenwasserstoffgruppen bedeutet; -SR¹; -NR²₂ und -PR³₂, wobei jedes R¹, R² oder R³ unabhängig ein substituierter oder unsubstituierter Kohlenwasserstoffrest wie oben definiert ist, oder ein C₁- bis C₃₀-kohlenwasserstoffsubstituiertes Organometalloid ersetzt ist.

11. Katalysatorsystem, das eine Übergangsmetallkatalysatorverbindung und mindestens zwei nichtkoordinierende Anion- "NCA"-Aktivatoren umfasst, wobei die beiden NCA-Aktivatoren ein Anion wie in Formel I beschrieben umfassen, außer dass das N in dem zweiten NCA in dem ArNHal an einer anderen Position in dem stickstoffhaltigen aromatischen Ring als das N in dem ArNHal des ersten NCA ist, wobei Formel I
RₙM(ArNHal)₄₋ₙ (I)
ist, wobei R ein monoanionischer Ligand ist; M ein Metall oder Metalloid der Gruppe 13 ist; ArNHal ein halogenierter stickstoffhaltiger aromatischer Ring, polycyclischer aromatischer Ring oder eine halogenierte stickstoffhaltige aromatische Ringstruktur ist, in der zwei oder mehr Ringe (oder kondensierte Ringsysteme) direkt aneinander oder miteinander verbunden sind; und n 0, 1, 2 oder 3 ist.

12. Katalysatorsystem nach Anspruch 11, bei dem M B oder Al ist und/oder ArNHal ein oder mehrere von Tetrafluorpyridin, Hexafluorchinolin oder Hexafluorisochinolin ist.

13. Katalysatorsystem nach einem der Ansprüche 11 oder 12, bei dem die NCA-Aktivatoren durch die folgende Formel wiedergegeben werden:
[Z_{d}]⁺ [RₙM(ArNHal)₄₋ₙ]⁻
wobei R ein monoanionischer Ligand ist; M ein Metall oder Metalloid der Gruppe 13 ist; ArNHal ein halogenierter stickstoffhaltiger aromatischer Ring, polycyclischer aromatischer Ring oder eine halogenierte stickstoffhaltige aromatische Ringstruktur ist, in der zwei oder mehr Ringe (oder kondensierte Ringsysteme) direkt aneinander oder miteinander verbunden sind; n 0, 1, 2 oder 3 ist; Z (L-H) oder eine reduzierbare Lewis-Säure ist; L eine neutrale Lewis-Base ist; H Wasserstoff ist; (L-H) eine Brönstedt-Säure ist und d 1, 2 oder 3 ist.

14. Katalysatorsystem nach einem der Ansprüche 11 bis 13, bei dem R ausgewählt ist aus der Gruppe bestehend aus aliphatischen oder aromatischen, substituierten oder unsubstituierten C₁- bis C₃₀-Kohlenwasserstoffgruppen, wobei substituiert bedeutet, dass mindestens ein Wasserstoff an einem Kohlenstoffatom durch einen Kohlenwasserstoff-, Halogenid-, Halogenkohlenstoff-, kohlenwasserstoff- oder halogenkohlenstoffsubstituierten Organometalloid-, Dialkylamido-, Alkoxy-, Aryloxy-, Alkylsulfido-, Arylsulfido-, Alkylphosphido-, Arylphosphid- oder anderen anionischen Substituenten; Fluorid; raumerfüllende Alkoxide, wobei raumerfüllend C₄-bis C₂₀-Kohlenwasserstoffgruppen bedeutet; -SR¹; -NR²₂ und -PR³₂, wobei jedes R¹, R² oder R³ unabhängig ein substituierter oder unsubstituierter Kohlenwasserstoffrest wie oben definiert ist, oder ein C₁- bis C₃₀-kohlenwasserstoffsubstituiertes Organometalloid ersetzt ist.

15. Verfahren zum Polymerisieren von Olefinen, bei dem Olefine mit dem Katalysatorsystem gemäß einem der Ansprüche 1 bis 14 in Kontakt gebracht werden.

## Revendications

1. Système de catalyseur comprenant un composé catalyseur à base de métal de transition et au moins deux activateurs d'anions non coordinants « NCA » contenant du bore représentés par la formule
Z_{d}⁺(A^{d-})
où Z est (L-H) ou un acide de Lewis réductible, L est une base de Lewis neutre ; H est hydrogène ; (L-H) est un acide de Brønsted ; A^{d-} est un anion non coordinant contenant du bore et ayant la charge d- ; d vaut 1, 2 ou 3 ; où, dans le premier activateur de NCA, Z est un acide de Brønsted et dans le deuxième activateur de NCA, Z est un acide de Lewis réductible.

2. Système de catalyseur selon la revendication 1, dans lequel l'acide de Lewis réductible est représenté par la formule (Ar₃C⁺), où Ar est aryle ou aryle substitué par un hétéroatome, C₁ à C₄₀-hydrocarbyle ou C₁ à C₄₀-hydrocarbyle substitué, préférablement l'acide de Lewis réductible est représenté par la formule (Ph₃C⁺), où Ph est phényle ou phényle substitué par un hétéroatome, C₁ à C₄₀-hydrocarbyle ou C₁ à C₄₀-hydrocarbyle substitué.

3. Système de catalyseur selon la revendication 1 ou 2, dans lequel le deuxième activateur de NCA Z_{d}⁺ est triphénylcarbonium.

4. Système de catalyseur selon la revendication 1, 2 ou 3, dans lequel le premier activateur de NCA Z_{d}⁺ est représenté par la formule
(L-H)_{d}⁺
où L est une base de Lewis neutre ; H est hydrogène ; (L-H) est un acide de Brønsted ; et d vaut 1, 2 ou 3, préférablement (L-H)_{d}⁺ est un acide de Brønsted choisi parmi ammonium, oxonium, phosphonium, silylium, et des mélanges de ceux-ci.

5. Système de catalyseur selon la revendication 1, 2, 3 ou 4, dans lequel le composant d'anion A^{d-} est représenté par la formule
[M^{k+}Qₙ]^{d-}
où k vaut 1, 2 ou 3 ; n vaut 1, 2, 3, 4, 5 ou 6 (préférablement 1, 2, 3 ou 4) ; n - k = d ; M est bore, et Q est choisi indépendamment parmi des radicaux hydrure, dialkylamido ponté ou non ponté, halogénure, alcoxyde, aryloxyde, hydrocarbyle, hydrocarbyle substitué, halogénocarbyle, halogénocarbyle substitué et hydrocarbyle substitué par halogéno, ledit Q ayant jusqu'à 20 atomes de carbone, à condition que Q ne soit pas halogénure dans plus de 1 occurrence,.

6. Système de catalyseur selon la revendication 1, 2, 3, 4 ou 5, dans lequel les deux NCA sont [Ph₃C⁺] [B(C₆F₅)₄⁻] et [Me₃NH⁺] [B(C₆F₅)₄⁻] ; où Ph est phényle et Me est méthyle.

7. Système de catalyseur comprenant un composé catalyseur à base de métal de transition et au moins deux activateurs d'anions non coordinants « NCA », où au moins un activateur de NCA comprend un anion tel que décrit dans la Formule I et au moins un activateur de NCA ne comprend pas d'anion tel que décrit dans la Formule I, où la Formule I est
RₙM(ArNHal)₄₋ₙ (I)
où R est un ligand mono-anionique ; M est un métalloïde ou métal du Groupe 13 ; ArNHal est un cycle aromatique azoté et halogéné, un cycle aromatique polycyclique ou un assemblage de cycles aromatiques dans lequel deux, ou plus, cycles (ou noyaux condensés) sont reliés directement les uns ou autres ou ensemble ; et n vaut 0, 1, 2 ou 3.

8. Système de catalyseur selon la revendication 7, dans lequel le NCA ne comprenant pas d'anion représenté par la Formule I est représenté par la formule suivante : Z_{d}⁺ (A^{d-}) où Z est (L-H) ou un acide de Lewis réductible, L est une base de Lewis neutre ; H est hydrogène ; (L-H) est un acide de Brønsted ; A^{d-} est un anion non coordinant contenant du bore et ayant la charge d- ; d vaut 1, 2 ou 3 ; où, de manière alternative, dans le premier activateur de NCA, Z est un acide de Brønsted et dans le deuxième activateur de NCA, Z est un acide de Lewis réductible.

9. Système de catalyseur selon la revendication 8, dans lequel l'acide de Lewis réductible est représenté par la formule (Ar₃C⁺), où Ar est aryle ou aryle substitué par un hétéroatome ; C₁ à C₄₀-hydrocarbyle ; ou C₁ à C₄₀-hydrocarbyle substitué ; préférablement l'acide de Lewis réductible est représenté par la formule (Ph₃C⁺), où Ph est phényle ou phényle substitué par un hétéroatome, C₁ à C₄₀-hydrocarbyle ou C₁ à C₄₀-hydrocarbyle substitué.

10. Système de catalyseur selon l'une quelconque des revendications 7 à 9, dans lequel au moins un activateur de NCA est représenté par la formule
[Z_{d}]⁺[RₙM(ArNHal)₄₋ₙ]⁻
où R est un ligand mono-anionique ; M est un métalloïde ou métal du Groupe 13 ; ArNHal est un cycle aromatique azoté et halogéné, un cycle aromatique polycyclique ou un assemblage de cycles aromatiques dans lequel deux, ou plus, cycles (ou noyaux condensés) sont reliés directement les uns ou autres ou ensemble ; n vaut 0, 1, 2 ou 3 ; Z est (L-H) ou un acide de Lewis réductible, L est une base de Lewis neutre ; H est hydrogène ; (L-H) est un acide de Brønsted ; et d vaut 1, 2 ou 3 ; et où R est choisi dans le groupe constitué par des groupements C₁ à C₃₀-hydrocarbyle aliphatiques ou aromatiques, substitués ou non substitués, où par le terme « substitué » on entend qu'au moins un hydrogène sur un atome de carbone est remplacé par un substituant hydrocarbyle, halogénure, halogénocarbyle, hydrocarbyle ou organo-métalloïde substitué par halogénocarbyle, dialkylamido, alcoxy, aryloxy, alkylsulfido, arylsulfido, alkylphosphido, arylphosphide, ou un autre substituant anionique ; fluorure ; des alcoxydes encombrants, où par le terme « encombrant » on entend des groupements C₄ à C₂₀-hydrocarbyle ; -SR¹ ; -NR²₂ et - PR³₂, où chaque R¹, R² ou R³ est indépendamment un hydrocarbyle substitué ou non substitué tel que défini ci-dessus ; ou un organo-métalloïde substitué par C₁ à C₃₀-hydrocarbyle.

11. Système de catalyseur comprenant un composé catalyseur à base de métal de transition et au moins deux activateurs d'anions non coordinants « NCA », où les deux activateurs de NCA comprennent un anion tel que décrit dans la Formule I, sauf que le N dans le deuxième NCA dans ArNHal est au niveau d'une position différente dans le cycle aromatique azoté par rapport au N dans ArNHal du premier NCA, où la Formule I est
RₙM(ArNHal)₄₋ₙ (I)
où R est un ligand mono-anionique ; M est un métalloïde ou métal du Groupe 13 ; ArNHal est un cycle aromatique azoté et halogéné, un cycle aromatique polycyclique ou un assemblage de cycles aromatiques dans lequel deux, ou plus, cycles (ou noyaux condensés) sont reliés directement les uns ou autres ou ensemble ; et n vaut 0, 1, 2 ou 3.

12. Système de catalyseur selon la revendication 11, dans lequel M est B ou Al et/ou ArNHal est un ou plusieurs parmi tétrafluoropyridine, hexafluoro-quinoléine, ou hexafluoroisoquinoléine.

13. Système de catalyseur selon l'une quelconque des revendications 11 ou 12, dans lequel les activateurs de NCA sont représentés par la formule
[Z_{d}]⁺[RₙM(ArNHal)₄₋ₙ]⁻
où R est un ligand mono-anionique ; M est un métalloïde ou métal du Groupe 13 ; ArNHal est un cycle aromatique azoté et halogéné, un cycle aromatique polycyclique ou un assemblage de cycles aromatiques dans lequel deux, ou plus, cycles (ou noyaux condensés) sont reliés directement les uns ou autres ou ensemble ; n vaut 0, 1, 2 ou 3 ; Z est (L-H) ou un acide de Lewis réductible, L est une base de Lewis neutre ; H est hydrogène ; (L-H) est un acide de Brønsted ; et d vaut 1, 2 ou 3.

14. Système de catalyseur selon l'une quelconque des revendications 11 à 13, dans lequel R est choisi dans le groupe constitué par des groupements C₁ à C₃₀-hydrocarbyle aliphatiques ou aromatiques, substitués ou non substitués, où par le terme « substitué » on entend qu'au moins un hydrogène sur un atome de carbone est remplacé par un substituant hydrocarbyle, halogénure, halogénocarbyle, hydrocarbyle ou organo-métalloïde substitué par halogénocarbyle, dialkylamido, alcoxy, aryloxy, alkylsulfido, arylsulfido, alkylphosphido, arylphosphide, ou un autre substituant anionique ; fluorure ; des alcoxydes encombrants, où par le terme « encombrant » on entend des groupements C₄ à C₂₀-hydrocarbyle ; -SR¹ ; -NR²₂ et -PR³₂, où chaque R¹, R² ou R³ est indépendamment un hydrocarbyle substitué ou non substitué tel que défini ci-dessus ; ou un organo-métalloïde substitué par C₁ à C₃₀-hydrocarbyle.

15. Méthode de polymérisation d'oléfines, comprenant la mise en contact des oléfines avec le système de catalyseur selon l'une quelconque des revendications 1 à 14.
